# EUROPEAN PATENT SPECIFICATION

(11) **EP 2 343 762 B1**
(45) Date of publication and mention of the grant of the patent: **07.05.2014**
(21) Application number: 09823331.5
(22) Date of filing: 29.10.2009
(51) Int. Cl.: H01M 4/86, H01M 8/02, H01M 8/10

(54) **MEMBRANE ELECTRODE ASSEMBLY AND FUEL CELL**
MEMBRANELEKTRODENANORDNUNG UND BRENNSTOFFZELLE
ENSEMBLE ÉLECTRODE MEMBRANAIRE ET PILE À COMBUSTIBLE

(30) Priority: 31.10.2008 JP 2008281548; 31.10.2008 JP 2008281553; 08.06.2009 JP 2009137118
(43) Date of publication of application: 13.07.2011
(73) Proprietor: Panasonic Corporation, Kadoma-shi Osaka 571-8501 (JP)
(72) Inventor: YAMAUCHI, Masaki, 1-61, Shiromi 2-chome, Chuo-ku Osaka-shi, Osaka 540-6207 (JP); TSUJI, Yoichiro, 1-61, Shiromi 2-chome, Chuo-ku Osaka-shi, Osaka 540-6207 (JP)
(74) Representative: Grünecker, Kinkeldey, Stockmair & Schwanhäusser
(86) International application number: PCT/JP2009/005739
(87) International publication number: WO 2010/050218

(56) References cited:
- EP-A1- 1 229 600
- EP-A1- 1 517 392
- EP-A2- 0 917 226
- WO-A1-2005/043656
- JP-A- 9 245 801
- JP-A- 2001 057 215
- JP-A- 2005 197 150
- JP-A- 2007 141 783
- JP-A- 2007 242 444
- JP-A- 2009 076 451
- US-A1- 2002 146 616
- US-A1- 2007 202 388

## Description

### TECHNICAL FIELD

The present invention relates to a fuel cell used as a driving source for a mobile object such as a car, a dispersed power generation system, a domestic cogeneration system, and others; and a membrane-electrode-assembly that the fuel cell has.

### BACKGROUND ART

Fuel cells (for example, a polymer electrolyte fuel cell) are each a device wherein a hydrogen-containing fuel gas and an oxygen-containing oxidizer gas, such as air, are caused to react electrochemically with each other, thereby generating electric power and heat simultaneously.

A fuel cell is generally formed by laminating a plurality of cells onto each other, and pressing and fastening these cells onto each other through fastening members such as bolts. Any one of the cells is formed by sandwiching a membrane-electrode-assembly (referred to as an MEA hereinafter) between a pair of plate-form conductive separators.

The MEA includes a polymer electrolyte membrane, and a pair of electrode layers arranged on both surfaces of the polymer electrolyte membrane, respectively. One of the paired electrode layers is an anode electrode, which may be referred to as a fuel electrode, and the other is a cathode electrode, which may be referred to as an air electrode. The paired electrode layers each include a catalyst layer made mainly of carbon powder wherein a metal catalyst is carried on carbon particles, and a conductive, porous gas diffusion layer arranged on the catalyst layer. The gas diffusion layer is generally formed by laying a coating layer including carbon and a water repellent material onto a surface of a base material (or substrate) made of carbon fiber (see, for example, JP-A-2003-197202) . When a fuel gas contacts the anode electrode and further an oxidizer gas contacts the cathode electrode, an electrochemical reaction is generated so that electric power and heat are generated.

In order to improve the power generation performance of fuel cells in recent years, investigations have been made for making the power generation temperature thereof higher than that in the related art to make the temperature for heat collection high. In order to make fuel cell systems simple, investigations have been made about a matter that the humidification quantity supplied to electrode layers of an MEA is made lower than that in the related art and the fuel cell is operated (low-humidification operation). When a conventional fuel cell having the above-mentioned structure is operated at such a high temperature and a low humidity, the water-retaining performance of the insides of its gas diffusion layers cannot be kept sufficiently high since a porosity of the carbon fiber base material of the gas diffusion layers is usually as high as 80% or more. For this reason, the insides of the electrode layers are dried so that the proton conduction resistance of the polymer electrolyte membrane is increased. As a result, there remains an issue that the power generation performance (voltage) is lowered.

Thus, a porosity of the gas diffusion layers has been required to be made low. In order to make the porosity of the gas diffusion layers lower, it is necessary to form the gas diffusion layers without using any carbon fiber as a base material. As a gas diffusion layer wherein no carbon fiber is usedasabasematerial, thereisalayerdisclosedin, for example, Patent Document 2 (JP-A-2007-242444).

In order to attain the supply of gas and the discharge of generated water with a higher certainty, Patent Document 2 discloses gas diffusion layers containing a fluorine-contained resin and carbon particles and having a pore ratio (corresponding to the porosity in the present invention) of 60% or less. Since the pore ratio of the gas diffusion layers in Patent Document 2 is made as low as 60% or less, the water-retaining performance of the gas diffusion layers can be kept high even when the fuel cell is operated at a high temperature and a low humidity. As a result, the power generating performance of the fuel cell can be improved.

### PRIOR ART DOCUMENTS

### PATENT DOCUMENT

Patent Document 1: JP-A-2003-197202
Patent Document 2: JP-A-2007-242444

EP 1 229 600 A1, JP 2001057215A, JP 2007 141783A, WO 2005/043656 A1 and US 2002/146616 A1 also disclose membrane electrode assemblies.

### SUMMARY OF THE INVENTION

### SUBJECT TO BE SOLVED BY THE INVENTION

However, about fuel cells, power generating performance at a higher level has been desired. According to the structure disclosed in Patent Document 2, the power generating performance has not yet been sufficient.

Accordingly, an object of the present invention is to improve the issues, and provide a membrane-electrode-assembly and a fuel cell that make it possible to make the power generating performance thereof better under high-temperature and low-humidity operating conditions.

### MEANS FOR SOLVING THE SUBJECT

In order to improve the issues in the related art, the present inventors have repeatedlymade eager investigations, so as to find out the following matter:
In a fuel cell, generation water generated with the generation of electric power is generated mainly in its cathode electrode. Thus, the cathode electrode is more easily moistened than its anode electrode. In the meantime, a fuel gas containing hydrogen is supplied to the anode electrode while an oxidizer gas containing oxygen is supplied to the cathode electrode. Oxygen has a nature of being lower in gas-diffuseness than hydrogen.

Thus, the present inventors have found out that a gas diffusion layer higher in water-retaining performance is used as an anode gas diffusion layer which an anode electrode has while a gas diffusion layer higher in gas-diffusibility is used as a cathode gas diffusion layer which a cathode electrode has, whereby the membrane-electrode-assembly gives an improved power generating performance. Thus, the present invention has been made.

In order to achieve the above-mentioned object, the present invention is provided with the following arrangements.

According to a first aspect of the present invention, there is provided a membrane-electrode-assembly includes:
a polymer electrolyte membrane,
a pair of catalyst layers opposed to each other to interpose the polymer electrolyte membrane therebetween, and
an anode gas diffusion layer and a cathode gas diffusion layer opposed to each other to interpose the polymer electrolyte membrane and the paired catalyst layers therebetween, wherein
the anode gas diffusion layer includes a porous member mainly including conductive particles and a polymeric resin,
a porosity of the anode gas diffusion layer is 60% or less, and
a porosity of the cathode gas diffusion layer is larger than that of the anode gas diffusion layer,
wherein a thickness of the cathode gas diffusion layer is smaller than that of the anode gas diffusion layer,
wherein the thickness of each of the anode gas diffusion layer and the cathode gas diffusion layer is 200µm or more, and 400 µm or less.

The "porous member made mainly of conductive particles and a polymeric resin" means a porous member having a structure supported by the conductive particles and the polymer resin (the so-called self-support structure) without using any carbon fiber as a base material. When conductive particles and a polymeric resin constitute a porous member, for example, a surfactant and a dispersing solvent are used therein as will be described later. In this case, the surfactant and the dispersing solvent are removed by firing in the production process. However, they may not be sufficiently removed so that they may remain in the porous member. Accordingly, the above means the following: as far as the porous member in the present invention has a self-support structure wherein no carbon fiber is used as a base material, the porous member may contain a surfactant and a dispersing solvent remaining as described above; and further as far as the porous member in the present invention has a self-support structure wherein no carbon fiber is used as a base material, the porous member may contain other materials (for example, a carbon fiber that is a short fiber).

According to a second aspect of the present invention, there is provided the membrane-electrode-assembly according to the first aspect, wherein the porosity of the anode gas diffusion layer is 42% or more.

According to a third aspect of the present invention, there is provided the membrane-electrode-assembly according to the first or second aspect, wherein the porosity of the cathode gas diffusion layer is more than 60%.

According to a fourth aspect of the present invention, there is provided the membrane-electrode-assembly according to any one of the first to third aspects, wherein the cathode gas diffusion layer comprises a porous member mainly including conductive particles and a polymeric resin.

According to an fifth aspect of the present invention, there is provided the membrane-electrode-assembly according to the fourth aspect, wherein the porosity of the cathode gas diffusion layer is 76% or less.

According to a sixth aspect of the present invention, there is provided the membrane-electrode-assembly according to the fourth or fifth aspect, wherein the conductive particles contained in each of the anode gas diffusion layer and the cathode gas diffusion layer comprise two kinds of carbon materials different from each other in average particle diameter.

According to a seventh aspect of the present invention, there is provided the membrane-electrode-assembly according to the sixth aspect, wherein about the two kinds of carbon materials contained in the anode gas diffusion layer, which are different from each other in average particle diameter, a blend ratio of the carbon material small in average particle diameter to the carbon material large in average particle diameter is from 1 : 0.7 to 1:2.

According to an eigth aspect of the present invention, there is provided the membrane-electrode-assembly according to any one of the fourth to seventh aspects, wherein a weight of the polymeric resin contained in the cathode gas diffusion layer is larger than that of the polymeric resin contained in the anode gas diffusion layer, each of the weights being weight per unit volume thereof.

According to a ninth aspect of the present invention, there is provided the membrane-electrode-assembly according to the eigth aspect, wherein the anode gas diffusion layer and the cathode gas diffusion layer contain the polymer resin in an amount of 10% or more by weight and 17% or less by weight.

According to a thenth aspect of the present invention, there is provided the membrane-electrode-assembly according to any one of the fourth to ninth aspects, wherein the anode gas diffusion layer and the cathode gas diffusion layer contain a carbon fiber in a weight smaller than a weight of the polymeric resin.

According to a eleventh aspect of the present invention, there is provided the membrane-electrode-assembly according to the thenth aspect, wherein a weight of the carbon fiber contained in the cathode gas diffusion layer is larger than that of the carbon fiber contained in the anode gas diffusion layer, each of the weights being weight per unit volume thereof.

According to a twelth aspect of the present invention, there is provided the membrane-electrode-assembly according to the eleventh aspect, wherein the anode gas diffusion layer and the cathode gas diffusion layer contain the carbon fiber in an amount of 2.0% or more by weight, and 7.5% or less by weight.

According to a thirteenth aspect of the present invention, there is provided the membrane-electrode-assembly according to any one of tenth to twelfth aspects, wherein the carbon fiber is any one of vapor growth process carbon fiber, milled fiber, and chopped fiber.

According to a fourteenth aspect of the present invention, there is provided a fuel cell, including a membrane-electrode-assembly as recited in any one of the first to thirteenth aspects, and
a pair of separators arranged to interpose the membrane-electrode-assembly therebetween.

According to an fifteenth aspect of the present invention, there is provided the fuel cell according to the fourteenth aspect, wherein when the fuel cell is operated, dew points of a fuel gas and an oxidizer gas supplied to the fuel cell are lower than an operating temperature of the fuel cell.

### EFFECTS OF THE INVENTION

In accordance with the membrane-electrode-assembly and the fuel cell according to the present invention, the anode gas diffusion layer includes the porous member, which is made mainly of conductive particles and a polymeric resin, and the porosity thereof is set to 60% or less; therefore, the water-retaining performance of the anode gas diffusion layer can be made high. Additionally, the porosity of the cathode gas diffusion layer is made larger than that of the anode gas diffusion layer; thus, the gas-diffusing performance thereof can be made high. In this way, the power generating performance can be made far better than any conventional membrane-electrode-assembly and fuel cell in which an anode gas diffusion layer and a cathode gas diffusion layer are formed to have the same structure.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a sectional view of a fuel cell according to an embodiment of the present invention;
Fig. 2 is a graph showing results obtained by measuring the average particle diameter of acetylene black;
Fig. 3 is a graph showing results obtained by measuring the average particle diameter of graphite;
Fig. 4 is a flowchart showing a process for producing a gas diffusion layer which is made of a porous member made mainly of conductive particles and a polymeric resin;
Fig. 5 is a flowchart showing a process for producing a gas diffusion layer which is made of a porous member made mainly of conductive particles and a polymeric resin and containing an added carbon fiber; and
Fig. 6 is a sectional view of a fuel cell according to a modified example of the embodiment of the present invention.

### MODE FOR CARRYING OUT THE INVENTION

Referring to the drawings, an embodiment of the present invention will be described hereinafter. In all of the figures, the same references are attached to the same or corresponding members or parts, and descriptions overlapping therebetween are omitted.

### «Embodiment»

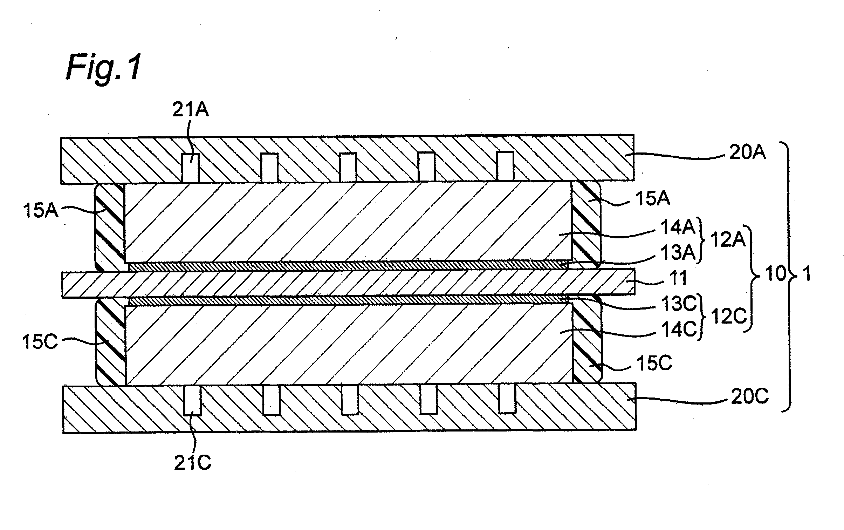

Fig. 1 is a sectional view of a basic structure of a fuel cell according to an embodiment of the present invention. The fuel cell according to the embodiment is a polymer electrolyte type fuel cell wherein a fuel gas containing hydrogen and an oxidizer gas containing oxygen, such as air, are caused to react electrochemically with each other, thereby generating electric power and heat simultaneously. The present invention is not limited to any polymer electrolyte type fuel cell, and may be applied to various fuel cells.

As illustrated in Fig. 1, the fuel cell of the embodiment is equipped with a cell (single cell) 1 having a membrane-electrode-assembly 10 (referred to as an MEA hereinafter) and a pair of conductive separators 20A and 20C that are each in a plate form and are arranged on both surfaces of the MEA 10, respectively. The fuel cell according to the embodiment may be formed by laminating a plurality of cells that are each equivalent to the cell 1 onto each other. In this case, it is preferred that the cells 1 laminated onto each other are pressed and fastened under a predetermined pressure by means of fastening members (not illustrated), such as bolts, in order to cause neither any fuel gas nor any oxidizer gas to leak therefrom and in order to reduce the contact resistance.

The MEA 10 has a polymer electrolyte membrane 11 for transporting hydrogen ions selectively, and a pair of electrode layers formed on both surfaces of the polymer electrolyte membrane 11, respectively. One of the paired electrode layers is an anode electrode, which may be referred to as a fuel electrode, 12A, and the other is a cathode electrode, which may be referred to as an air electrode, 12C. The anode electrode 12A has a paired anode catalyst layer 13A which is formed on one of the surfaces of the polymer electrolyte membrane 11 and which is made mainly of carbon powder on which a platinum-group-element catalyst is carried; and an anode gas diffusion layer 14A which is formed on the anode catalyst layer 13A, and which has power-collecting effect, gas-permeability and water-repellency together. The cathode electrode 12C has a paired cathode catalyst layer 13C which is formed on the other surface of the polymer electrolyte membrane 11 and which is made mainly of carbon powder on which a platinum-group-element catalyst is carried; and a cathode gas diffusion layer 14C which is formed on the cathode catalyst layer 13C and which has power-collecting effect, gas-permeability, and water-repellency together.

In the anode separator 20A arranged on the anode electrode 12A side, in a main surface thereof that contacts the anode gas diffusion layer 14A is made a fuel gas flow passage grooves 21A where a fuel gas is to be caused to flow. The fuel gas flow passage grooves 21A include, for example, grooves substantially parallel to each other. In the cathode separator 20C arranged on the cathode electrode 12C side, in a main surface thereof that contacts the cathode gas diffusion layer 14C is made an oxidizer gas flow passage grooves 21C where an oxidizer gas is to be caused to flow. The oxidizer gas flow passage groove grooves 21C include, for example, grooves substantially parallel to each other. In the anode separator 20A and the cathode separator 20C, one or more cooling water flow passages (not illustrated) through which cooling water or the like is to be passed may be made. A fuel gas is supplied to the anode electrode 12A through the fuel gas flow passage grooves 21A and further an oxidizer gas is supplied through the oxidizer gas flow passage grooves 21C to the cathode electrode 12C, thereby causing an electrochemical reaction to generate electric power and heat.

In the above, the fuel gas flow passage grooves 21A are made in the anode separator 20A; however, the present invention is not limited to this manner. For example, the fuel gas flowpassage grooves 21A may be made in the anode gas diffusion layer 14A. In this case, the anode separator 20A may be in a flat board form. Similarly, in the above, the oxidizer gas flow passage grooves 21C are made in the cathode separator 20C; however, the present invention is not limited to this manner. For example, the oxidizer gas flow passage grooves 21C may be made in the cathode gas diffusion layer 14C. In this case, the cathode separator 20C may be in a flat board form.

In order to prevent the fuel gas from leaking to the outside, an anode gasket 15A is arranged as a sealing member between the anode separator 20A and the polymer electrolyte membrane 11 to cover side walls of the anode catalyst layer 13A and the anode gas diffusion layer 14A. Furthermore, in order to prevent the oxidizer gas from leaking to the outside, a cathode gasket 15C is arranged as a sealing member between the cathode separator 20C and the polymer electrolyte membrane 11 to cover side walls of the cathode catalyst layer 13C and the cathode gas diffusion layer 14C.

For the anode gasket 15A and the cathode gasket 15C, use may be made of an ordinary thermoplastic resin or thermosetting resin, or some other material. For the anode gasket 15A and the cathode gasket 15C, for example, the following may be used: silicone resin, epoxy resin, melamine resin, polyurethane resin, polyimide resin, acrylic resin, ABS resin, polypropylene, liquid crystal polymer, polyphenylene sulfide resin, polysulfone, or glass fiber reinforced resin.

About the anode gasket 20A and the cathode gasket 20C, it is preferred that a part thereof intrudes into the circumferential region of the anode gas diffusion layer 14A or the cathode gas diffusion layer 14C. This manner makes it possible to improve the power generation endurance and the strength.

Insteadof the anode gasket 20Aandthe cathode gasket 20C, a gasket may be arranged between the anode separator 20A and the cathode separator 20C so as to cover side walls of the polymer electrolyte membrane 11, the anode catalyst layer 13A, the anode gas diffusion layer 14A, the cathode catalyst layer 13C, and the cathode gas diffusion layer 14C. In this way, a deterioration in the polymer electrolyte membrane 11 is restrained. Thus, the handle ability of the MEA10 can be improved, and when MEAs are mass-produced, the workability canbe improved.

The following will describe the structure of the anode gas diffusion layer 14A related to the embodiment of the present invention in more detail.

The anode gas diffusion layer 14A is made of a sheet-form rubbery porous member made mainly of conductive particles and a polymeric resin. A porosity of the anode gas diffusion layer 14A is set to 60% or less. This manner makes it possible to keep the water-retaining performance of the inside of the anode gas diffusion layer 14A high even when the present fuel cell is operated at a high temperature and low humidity. The porosity of the anode gas diffusion layer 14A is preferably 42% or more. When the porosity of the anode gas diffusion layer 14A is set to 42% or more, the anode gas diffusion layer 14A can easily be produced.

Examples of the material of the conductive particles include carbon materials such as graphite, carbon black, and activated carbon. Examples of carbon black include acetylene black (AB), furnace black, ketchen black, and Vulcan. It is preferred to use, out of these carbon black species, acetylene black as a main component of carbon black since the impurity content by percentage is small and the electroconductivity is high. Examples of a main component of graphite are natural graphite and artificial graphite. It is preferred to use, out of these species, artificial graphite as a main component of graphite since the impurity quantity therein is small.

The conductive particles preferably include two kinds of carbon materials different from each other in average particle diameter. According to this manner, the particles small in average particle diameter can be incorporated into gaps between the particles large in average particle diameter; therefore, it becomes easy to set the porosity of the whole of the anode gas diffusion layer 14A to 60% or less. For conductive particles making the formation of the filling structure easy, graphite is given. It is therefore preferred that the conductive particles are made of a mixture of acetylene black and graphite.

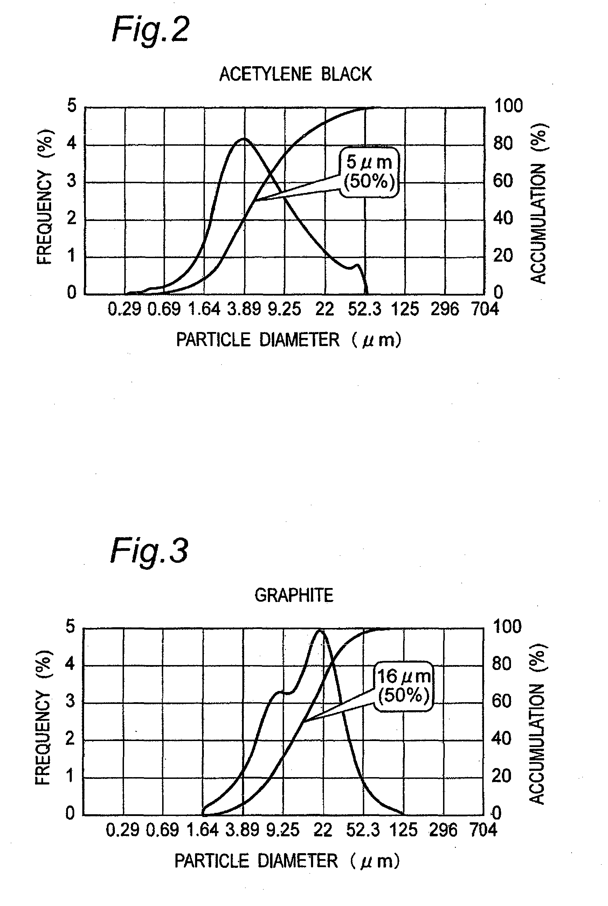

The average particle diameter D₅₀ (the particle diameter when the relative particle amount is 50%, which may be referred to as the median diameter) of acetylene black was measured by use of a laser diffraction type particle size measuring meter, Micro Track HRA. As a result, the D₅₀ was 5 µm as illustrated in Fig. 2. The average particle diameter D₅₀ of graphite was measured in the same way as that of acetylene black. As a result, the D₅₀ was 16 µm as shown in Fig. 3. The measurements of these average particle diameters were each made at the time when particles of acetylene black or graphite were dispersed in distilled water containing 10% by weight of a surfactant and then the particle size distribution became stable.

When the conductive particles are made of a mixture of three or more carbon materials, it is difficult to optimize conditions for dispersing, kneading, and rolling the materials, and other conditions. When the conductive particles are made only of a single carbon powder species, particles of the powder are not easily buried in gaps between particles thereof even when any carbon powder is used. Thus, the porosity is not easily set to 60% or less. It is therefore preferred that the conductive particles are made of a mixture of two kinds of carbon materials.

Examples of the ingredient form of the carbon material include powdery, fibrous, and granular forms. It is preferred from the viewpoint of dispersibility and handle ability to adopt, out of these forms, a powdery form as the ingredient form of the carbon material.

When the conductive particles are made of a mixture of two kinds of carbon materials different from each other in average particle diameter, the blend ratio of the carbon material small in average particle diameter to the carbon material large in average particle diameter is preferably from 1:0.7 to 1:2. The reason therefor will be described in detail later with reference to experimental data.

Examples of the polymeric resin include PTFE (polytetrafluoroethylene), FEP (tetrafluoroethylene/hexafluoropropylene copolymer, PVDF (polyvinylidene fluoride), ETFE (tetrafluoroethylene ethylene copolymer), PCTFE (polychlorotrifluoroethylene), and PFA (tetrafluoroethylene/perfluoroalkyl vinyl ether). It is preferred from the viewpoint of heat resistance, water repellency, and chemical resistance to use, out of these resins, PTFE. Examples of the ingredient form of PTFE include a dispersion and a powdery form. It is preferred from the viewpoint of workability to use, out of these forms, a dispersion as the ingredient form.

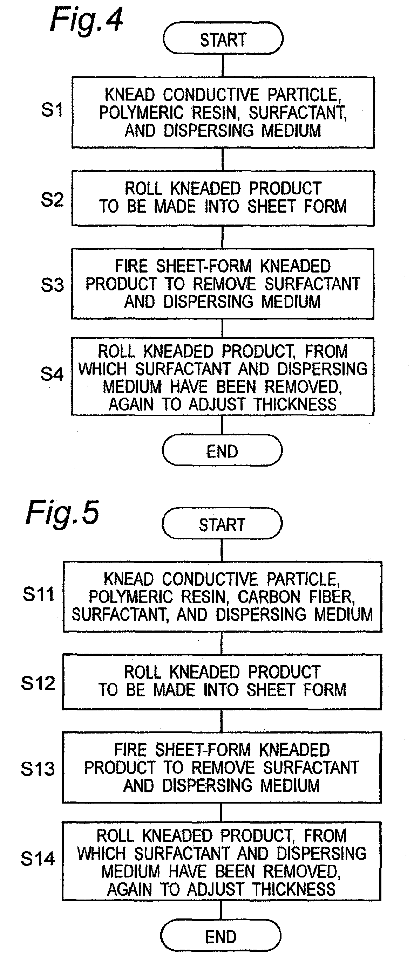

The method for producing the anode gas diffusion layer 14A is, for example, a method as illustrated in Fig. 4.

First, in step S1, kneaded are two kinds of carbon powders (conductive particles) different from each other in average particle diameter, a polymeric resin, a surfactant, and water (a dispersing solvent) (kneading step). More specifically, the conductive particles, a polymeric resin, a surfactant, and the dispersing solvent are charged into a stirring kneader, and then they are kneaded to be pulverized and made into grains. Thereafter, a polymeric resin material is added into the kneaded product, so as to be further dispersed. It is allowable to charge all the materials, which includes the polymeric resin material, simultaneously into the kneader without charging the polymeric resin material apart from the other materials into the kneader.

Next, in step S2, the kneaded product yielded by the kneading is subj ected to extrusion forming, and the resultant is rolled into a sheet form by means of a press machine (rolling step) .

Next, in step S3, the sheet-form kneaded product is fired to remove the surfactant and water from the kneaded product (firing step).

Next, in step S4, the rolling force of the press machine and the gap therein are adjusted to roll the kneaded product again, thereby adjusting the porosity and the thickness of the kneaded product (re-rolling step).

This process makes it possible to produce the anode gas diffusion layer 14A having a desired porosity and thickness. The process for producing the anode gas diffusion layer 14A is not limited to this process, and may be a different process. For example, one or more different steps may be included between any two of the individual producing steps.

The following will describe, in more detail, the structure of the cathode gas diffusion layer 14C related to the embodiment of the present invention.

The cathode gas diffusion layer 14C is formed to have a higher porosity than that of the anode gas diffusion layer 14A. The reason why the layer 14C is formed in this manner is as follows:
In the fuel cell, hydrogen and oxygen react with each other to generate water, thereby generating electric power. The generated water is generated mainly on the cathode electrode 12C side. When an appropriate amount of the generated water is present in the cathode gas diffusion layer 14C, the water may serve for the water-retention of the polymer electrolyte membrane 11 to contribute to an improvement in the performance. However, when the generated water is excessively present in the cathode gas diffusion layer 14C, it is feared that the arrival of the air distributed through the oxidizer gas flow passage grooves 21C to the cathode catalyst layer 13C is hindered. Therefore, the cathode electrode 12C is required to have a higher gas diffusibility than the anode electrode 12A. In the embodiment, by making a porosity of the cathode gas diffusion layer 14C higher than that of the anode gas diffusion layer 14A, the pore quantity of the cathode gas diffusion layer 14C is made large so that a high gas diffusibility can be obtained.

The porosity of the cathode gas diffusion layer 14C is preferably larger than 60%. This manner makes it possible to enhance the dischargeability of the generated water, thereby making the gas diffusibility high. Thus, the power generating performance is made even higher. In a case where the porosity of the cathode gas diffusion layer 14C is more than 76% when the layer 14C is made of a porous member mainly including conductive particles and a polymeric resin, the layer 14C cannot gain a sufficient strength even if any material is used therefor. It is therefore preferred that the porosity of the cathode gas diffusion layer 14C is 76% or less.

In the embodiment, at the time of comparing the cathode gas diffusion layer 14C with the anode gas diffusion layer 14A, a porosity of the layer 14C does not need to be 60% or less; thus, the cathode gas diffusion layer 14C may be made of a porous member containing a carbon fiber as a base material. In the same manner as the anode gas diffusion layer 14A, the cathode gas diffusion layer 14C may be made of a porous member mainly including conductive particles and a polymeric resin. This manner makes it possible to effectively attain the production of the anode gas diffusion layer 14A and the cathode gas diffusion layer 14C. In this case, the process for producing the cathode gas diffusion layer 14C may be equivalent to the process for producing the anode gas diffusion layer 14A.

In the case of the above-mentioned structure, the conductive particles contained in the cathode gas diffusion layer 14C are preferablymade of a single carbon material. As described above, the cathode gas diffusion layer 14C is required to have a high gas diffusibility. Thus, when the cathode gas diffusion layer 14C is produced from the single carbon material, the particle diameter of which is uniform, fine pores are easily made so that the gas diffusion layer can easily obtain a high porosity.

In the case of the above-mentioned structure, it is preferred that the weight of the polymeric resin contained in the cathode gas diffusion layer 14C is larger than the weight of the polymeric resin contained in the anode gas diffusion layer 14A, each of the weights being weight per unit volume thereof. The polymeric resin generally has water repellency; thus, as the occupation ratio (composition ratio) of the polymeric resin in any one of the gas diffusion layers is higher, water is more easily discharged therefrom. In the meantime, as the ratio of the polymeric resin is lower, the hydrophilicity (of the gas diffusion layer) is higher, so that water is more easily confined in the gas diffusion layer. Accordingly, by making the polymeric resin amount in the cathode gas diffusion layer 14C larger than that in the anode gas diffusion layer 14A, the anode gas diffusion layer 14A is caused to have a high water-retaining performance while the cathode gas diffusion layer 14C is caused to have a high gas diffusibility. This manner makes it possible to improve the power generating performance of the fuel cell.

The polymeric resin has a binder effect; therefore, when a thin gas diffusion layer is produced, the strength thereof can be made high by making the composition ratio of the polymeric resin therein high. The composition ratio of the polymeric resin is preferably from 10 to 17%. If the composition ratio of the polymeric resin is 10% or less, the strength of the gas diffusion layers lowers remarkably so that the MEA is not easily produced as a self-support. Moreover, the polymeric resin is an insulator; thus, if the composition ratio of the polymeric resin is 17% or more, the internal resistance of the gas diffusion layers increases so that the voltage therein may drop. The reason why the composition ratio of the polymeric resin is preferably from 10 to 17% will be described in detail later with reference to experimental data.

As described above, according to the fuel cell of the embodiment, the anode gas diffusion layer 14A is made of a porous member mainly including conductive particles and a polymeric resin, and the porosity thereof is set to 60% or more; therefore, the water-retaining performance of the anode gas diffusion layer 14A can be made high even under high-temperature and low-humidity driving conditions. The high-temperature and low-humidity driving conditions mean driving conditions that the dew points of the fuel gas and the oxidizer gas supplied to the fuel cell are lower than the driving temperature of the fuel cell. Under the high-temperature and low-humidity driving conditions, a decline in the power generating performance based on the drying of the polymer electrolyte membrane 11 becomes particularly remarkable. Accordingly, under the high-temperature and low-humidity driving conditions, it is preferred to use a layer particularly high in water-retaining performance as each of the gas diffusion layers (in particular, the anode gas diffusion layer 14A). In the fuel cell according to the embodiment, the porosity of the gas diffusion layer 14C is made larger than that of the anode gas diffusion layer 14A; thus, the gas diffusibility can be made higher. In other words, the anode gas diffusion layer 14A and the cathode gas diffusion layer 14C are not made to have the same structure as in the related art, but are made to have structures suitable for the respective layers; thus, the power generating performance can be made still better than in the related art.

The present invention is not limited to the embodiment, and may be carried out in various forms. For example, the anode gas diffusion layer 14A and the cathode gas diffusion layer 14C may contain the following, besides the conductive particles and the polymeric resin, in very small amounts: a surfactant, a dispersing solvent, and others that are used in the production of the anode gas diffusion layer 14A and the cathode gas diffusion layer 14C. Examples of the dispersing solvent include water, alcohols such as methanol and ethanol, and glycols such as ethylene glycol. Examples of the surfactant include nonionic surfactants such as polyoxyethylene alkyl ethers, and amphoteric ion surfactants such as alkylamine oxides. It is advisable to set the amounts of the dispersing solvent and the surfactant used in the production appropriately in accordance with the species of the conductive particles, the species of the polymeric resin, the blend ratio therebetween, and others. In general, as the amount of the dispersing solvent and that of the surfactant are larger, the conductive particles and the polymeric resin are dispersed into an evener state while the fluidity becomes high so that the gas diffusion layers each tend not to be easily made into a sheet.

The anode gas diffusion layer 14A and the cathode gas diffusion layer 14C may contain a carbon fiber in a weight smaller than that of the polymeric resin contained therein (the weight being a weight not permitting the carbon fiber to become a base material) . In other words, the anode gas diffusion layer 14A and the cathode gas diffusion layer 14C may be each made of a sheet-form, rubbery porous member to which a carbon fiber is added in a weight not permitting the carbon fiber to become a base material. In this case, the carbon fiber is not used as a base material, so that costs of the fuel cell can be decreased. The carbon fiber has a reinforcing effect; thus, by making the blend ratio of the carbon fiber high, one or more gas diffusion layers high in strength can be produced. This manner makes it possible to decrease the blend amount of the polymeric resin acting as a binder. Moreover, the blend ratio of the polymeric resin, which is an insulator, can be made low, so that the power generating performance can be improved. It is particularly effective for the production of a thin gas diffusion layer to incorporate the carbon fiber into the gas diffusion layer.

The method for producing a carbon-fiber-added gas diffusion layer as described above may be, for example, a method as illustrated in Fig. 5.

First, in step S11, conductive particles, a polymeric resin, a carbon fiber, a surfactant, and a dispersing solvent are kneaded.

In step S12, a kneadedproduct yielded by the kneading is rolled into a sheet form by means of a roll press machine, flat-plate press machine, or some other machine.

In step S13, the sheet-form kneaded product is fired to remove the surfactant and the dispersing solvent from the kneaded product.

In step S14, the kneaded product, from which the surfactant and the dispersing solvent have been removed, is again rolled, thereby adjusting the thickness thereof.

This process makes it possible to produce a carbon-fiber-added gas diffusion layer as described above.

In the anode gas diffusion layer 14A and the cathode gas diffusion layer 14C, the composition ratio of the carbon fiber is preferably 2.0% or more and less than 7.5%. If the composition ratio of the carbon fiber is 7.5% or more, the carbon fiber is stuck into the polymer electrolyte membrane 11 so that the polymer electrolyte membrane 11 may be damaged. The carbon fiber serves also for lowering the internal resistance of the gas diffusion layers. Thus, when the composition ratio of the carbon fiber is set to 2.0% or more, an effect of lowering the internal resistance can be sufficiently obtained. The reason why the composition ratio of the carbon fiber is preferably 2.0% or more and less than 7.5% will be described in detail later with reference to experimental data.

It is preferred that the weight of the carbon fiber contained in the cathode gas diffusion layer 14C is larger than that of the carbon fiber contained in the anode gas diffusion layer 14A, each of the weights being weight per unit volume thereof . Since the carbon fiber is smaller in bulk density and is larger in pore quantity than carbon particles, it is effective for making the porosity of the gas diffusion layers high to make the composition ratio of the carbon fiber high. Accordingly, when the per-unit-volume weight of the carbon fiber contained in the cathode gas diffusion layer 14C is made larger than that of the carbon fiber contained in the anode gas diffusion layer 14A, the porosity of the anode gas diffusion layer 14A can be made larger than that of the cathode gas diffusion layer 14C.

Examples of the material of the carbon fiber include vapor growth process carbon fiber (referred to as VGCF hereinafter), milled fiber, cut fiber, and chopped fiber. In the case of using VGCF as the carbon fiber, it is advisable to use a VGCF species having a fiber diameter of 0.15 µm and a fiber length of 15 µm. In the case of using milled fiber, cut fiber, or chopped fiber as the carbon fiber, it is advisable to use a species having a fiber diameter of 5 to 20 µm and a fiber length of 20 to 100 µm.

The raw material of milled fiber, cut fiber, or chopped fiber maybe anyone of PAN, pitch, and rayon type materials. It is preferred that the fiber is used in the state that bundles of short fibers produced by cutting or clipping original yarns (long-fiber filaments or short-fiber staples) are dispersed.

In order to improve the power generating performance of any fuel cell, it is effective to optimize the power generating temperature, the fuel-electrode-side humidification dew point, the air-electrode-side humidification dew point, the availability ratio of the fuel gas, the availability ratio of air, the flow passage forms of the separators, the specification of the catalyst layers, and others. Of physical property parameters of the gas diffusion layers, the thickness and the porosity thereof are highly sensitive to a change in the voltage. It is therefore more effective for an improvement in the power generating performance under high-temperature and low-humidity driving conditions to optimize the thickness and the porosity of the gas diffusion layers.

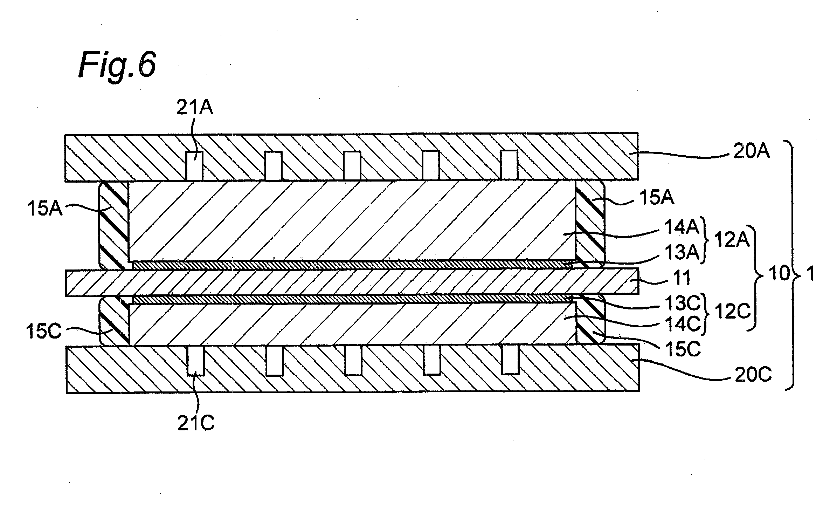

As illustrated in Fig. 6, therefore, a thickness of the cathode gas diffusion layer 14C is made smaller than that of the anode gas diffusion layer 14A. According to the diffusion law, the following tendency is produced when physical properties of any one of the gas diffusion layers except for the thickness thereof are kept constant: as the distance from the separator to the catalyst layer is shorter (that is to say, a thickness of the gas diffusion layer is smaller), a reaction gas more easily reaches the catalyst layer. The gas diffusibility of the cathode gas diffusion layer 14C is more easily lowered by the generated water; therefore, when the thickness of the cathode gas diffusion layer 14C is made smaller than that of the anode gas diffusion layer 14A, the gas diffusibility thereof can be made high. This manner makes it possible to improve the power generating performance.

The thicknesses of the anode gas diffusion layer 14A and the cathode gas diffusion layer 14C are from 200 µm or more and 400 µm or less. If the thicknesses of the anode gas diffusion layer 14A and the cathode gas diffusion layer 14C are smaller than 200 µm, it is verified by experiments that the power generating performance lowers remarkably. A reason therefor is considered as follows: the thicknesses of the gas diffusion layers become small, whereby the gas diffusibility becomes high; thus, the water-retaining performance lowers, whereby the polymer electrolyte membrane is dried so that the membrane resistance increases. By contrast, if the thicknesses of the anode gas diffusion layer 14A and the cathode gas diffusion layer 14C are larger than 400 µm, it is also verified by experiments that the power generating performance lowers remarkably. It is considered that this is because the thicknesses of the gas diffusion layers become large, whereby the internal resistance of the gas diffusion layers increases. A reason therefor will also be described in detail later with reference to experimental data.

### (About the blend ratio of conductive particles)

Two kinds of carbon materials (conductive particles) different from each other in average particle diameter are used to form each gas diffusion layer; using Table 1, the following will describe, in this case, a preferred blend ratio between the conductive particles large in average particle diameter and the conductive particles small in average particle diameter. In this experiment, the anode gas diffusion layer and the cathode gas diffusion layer are formed to have the same structure (the thickness, the porosity, and others).

**Table 1**

| | Sample 1 | Sample 2 | Sample 3 | Sample 4 | Sample 5 | Sample 6 | Sample 7 |
|---|---|---|---|---|---|---|---|
| Blend ratio of acetylene black to graphite | 1:2.3 | 1:2 | 1:1.5 | 1:1 | 1:0.7 | 1:0.5 | 1:0 |
| Thickness | 400 *µ*m | 400 *µ*m | 400 *µ*m | 400 *µ*m | 400 *µ*m | 400 *µ*m | 400*µ*m |
| Prosity | 65% | 42% | 50% | 55% | 60% | 65% | 70% |
| Resistance value | 19.9mΩ | 9.1mΩ | 12.3mΩ | 13.7mΩ | 15.5mΩ | 20.1 mΩ | 21.6mΩ |
| Voltage value | 0.552V | 0.639V | 0.642V | 0.631 V | 0.621 V | 0.550V | 0.546V |

The thicknesses of the gas diffusion layers were fixed to 400 µm and the blend ratio between graphite as an example of the conductive particles large in average particle diameter and acetylene black as an example of the conductive particles small in average particle diameter was varied; Table 1 is a table showing the porosity of the gas diffusion layers, and the resistance value, and the voltage value of the fuel cell at the time of the variation. Fuel cell samples 1 to 7 different from in the blend ratio between acetylene and graphite were produced as described below, and then the porosity, the resistance value, and the voltage value of the gas diffusion layers of each of samples 1 to 7 were measured.

Hereinafter, a description will be made about a process for producing the fuel cell common to individual samples 1 to 7.

First, into a mixer are charged acetylene black (registeredtrademark: DENKABLACK, manufacturedbyDenkiKagaku Kogyo Kabushiki Kaisha) and graphite (manufactured by Wako Pure Chemical Industries, Ltd.), the total amount of which is 150 g, 7.5 g of a surfactant (registered trade name: Triton X), and 170 g of water. Thereafter, the rotation number of the mixer is set to 100 rpm, and the individual materials are kneaded for 60 minutes. After the lapse of the 60 minutes, 70 g of a PTFE dispersion (AD 911 manufactured by Asahi Glass Co., Ltd.) is incorporated, as the polymeric resin, into the kneaded product yielded by the kneading, and further the mixture is stirred for 5 minutes.

The thus-yielded kneaded product is taken out in an amount of 40 g from the mixer, and the taken-out product is rolled into a sheet form by means of a drawing roller (the gap in which is set to 600 µm). Thereafter, the sheet-form kneaded product is fired at 300°C in a program-controlled firing furnace for 30 minutes to remove the surfactant and water in the kneaded product.

The kneaded product, from which the surfactant and water has been removed, is taken out from a firing furnace, and the drawing roller (gap: 400 µm) is used to roll the product again, thereby adjusting the thickness and decreasing a scatter in the thickness. Thereafter, the resultant is cut into pieces 6 cm square. In this way, rubbery gas diffusion layers of 400 µm in thickness are formed.

At the same time of the formation of the gas diffusion layers, or after the formation, a mixture of platinum-carried carbon (TEC10E50E, manufactured by Tanaka Kikinzoku Kogyo K.K.) and an ion exchange resin (registered trade name: Flemion, manufactured by Asahi Glass Co., Ltd.) is painted, as a catalyst layer, onto each surface of a polymer electrolyte membrane (registered trade name: Nafion 112, manufactured by Dupont). Thereafter, the mixture is dried to yield a membrane/catalyst-layer assembly. At this time, the size of the polymer electrolyte membrane is set to 15 cm square. The size of the catalyst layers is set to 5.8 cm square. The use amount of platinum is set to 0.35 mg/cm² on the anode electrode side, and set to 0.6 mg/cm² on the cathode electrode side.

Next, the gas diffusion layers formed as described above are arranged on both surfaces of the membrane/catalyst-layer assembly, respectively, and then these elements are hot-pressed (at 80°C and 10 kgf/cm²) to be bonded to each other, thereby producing an MEA.

Next, the produced MEA is sandwiched between a pair of separators (manufactured by Tokai Carbon Co., Ltd.). In this state, the workpiece is pressed until the fastening pressure turns to 10 kgf/cm² in such a manner that the individual elements will not get out of position.

In the way described above, fuel cell single-cell is produced.

Samples 1 to 7 can be produced only by varying the blend ratio between acetylene black and graphite.

The following will describe a method for measuring (calculating out) the porosity of each of the gas diffusion layers.

First, the apparent true density of eachof the formed gas diffusion layers is calculated out from the true density and the composition ratio of each of the materials constituting the gas diffusion layer.

Next, the weight, the thickness, and the length and the width of each of the formed gas diffusion layers are measured, and then the density of the gas diffusion layer is calculated out.

Next, the calculated density and the apparent true density of the gas diffusion layer are substituted into the equation of "the porosity = (the density of the gas diffusion layer)/(the apparent true density) x 100". In this way, the porosity is calculated.

As described above, the porosity of each of the formed gas diffusion layers can be measured.

A mercury porosimeter was used to measure the pore diameter distribution of each of the formed gas diffusion layers. As a result, it was verified that the porosity permitted to be calculated from the resultant accumulated pore quantity was equal to the porosity calculated as described above.

When samples 2 to 7 are compared with each other with reference to Table 1, it is understood that as the blend ratio of acetylene black to graphite turns from 1:2 toward 1:0 (that is, the occupation ratio of graphite becomes lower), the porosity becomes higher. In sample 7, wherein the blend ratio was 1:0 (that is, only acetylene black was used), the porosity was 70%. Even when the gap in the drawing roller was adjusted or some other manner was adopted, a porosity of the sample made only of acetylene was unable to be set to less than 70%.

When the blend ratio turned from 1:2 to 1:2.3 (that is, the amount of graphite was made two or more times larger than the amount of acetylene black), the porosity was largely raised into 65%. An attempt was made for forming a gas diffusion layer having a porosity of less than 42%. However, the gas diffusion layer was unable to be formed even when the blend ratio, the kneading conditions, the firing conditions, the rolling conditions, and others were changed. A reason therefor is considered as follows: when the blend ratio is 1: 2, the closest packing structure is formed; however, when the amount of graphite is two or more times larger than that of acetylene black, the closest packing structure is not formed.

The following will describe a method for measuring the resistance value and the voltage value of each of samples 1 to 7, which are shown in Table 1.

An electron load device (PLZ-4W, manufactured by Kikusui Electronics Corp.) is first connected to each of the samples.

Next, pure hydrogen is caused to flow, as a fuel gas, into the anode electrode while air is caused to flow, as an oxidizer gas, into the cathode electrode. At this time, the availability ratios thereof are 70% and 40%, respectively. About the anode electrode, and the cathode electrode, the gas humidification points are set to 65°C and 35°C, respectively. The cell temperature is set to 90°C.

Next, when the current density is 0.2 A/cm², the voltage value and the resistance value are measured. For the measurement of the resistance value while electric power is generated, an AC four-terminal method type resistance meter (MODEL 3566, manufactured by Tsuruga Electric Corp.) is used.

The measured resistance value includes the proton conduction resistance (membrane resistance), which shows a humidity state of the polymer electrolyte membrane, the internal resistances (electrical conduction resistances) of the individual members including the gas diffusion layers, and the contact resistances (electrical conduction resistances) between the individual members.

When samples 1 to 7 are compared with each other with reference to Table 1, it is understood that as the blend ratio of acetylene black to graphite is turned from 1:2 toward 1:0 (that is, the porosity becomes larger), the resistance becomes higher and the voltage value becomes lower. When sample 5, wherein the blend ratio is 1:0.7, is compared with sample 6, wherein the blend ratio is 1:0.5, it is understood that the resistance value and the voltage values are abruptly changed. In other words, it is understood that when the porosity becomes more than 60%, the resistance value abruptly turns high and the voltage value abruptly turns low. When sample 2, wherein the blend ratio is 1: 2, is compared with sample 1, wherein the blend is 1:2.3, it is understood that in sample 1, the resistance value is far higher and the voltage value is far lower. In other words, it is understood that when the porosity becomes more than 60%, the resistance value abruptly turns high and the voltage value abruptly turns low.

A reason therefor is considered as follows: when the porosity is more than 60%, the gas diffusion layer has a sparse structure; thus, inside the fuel cell, the shift of gas and water becomes easy so that the water or water vapor is easily discharged to the outside of the system, whereby the water-retaining performance is declined. When the water-retaining performance is declined, resistance components (in particular, a membrane resistance) increase, thereby lowering the voltage.

A gas diffusion layer having a porosity of less than 42% was not produced in the present test; however, it appears that when the porosity is low, a sufficient electrochemical reaction is not caused because of a declined gas-diffusing performance, so that the voltage value falls.

From the above-mentioned test results and consideration, the blend ratio of acetylene black to graphite would be preferably from 1:0.7 to 1.2. Considering the voltage value of each of the samples in Table 1, the blend ratio of acetylene black to graphite would be more preferably from 1:1.5 to 1: 2 and the porosity would be preferably 42% or more and 60% or less. Considering the voltage value of each of the samples in Table 1, the porosity would be more preferably 42% or more and 50% or less.

### (About the thickness)

Using Table 2, the following will describe a preferred thickness of gas diffusion layers. In this experiment, the anode gas diffusion layer and the cathode gas diffusion layer are made to have the same structure (the thickness, the porosity, and others.

**Table 2**

| | Sample 8 | Sample 9 | Sample 10 | Sample 11 | Sample 12 | Sample 13 * | Sample 14 * | Sample 15 * | Sample 16 * |
|---|---|---|---|---|---|---|---|---|---|
| Blend ratio of acetylene black to graphite | 12 | 12 | 12 | 12 | 12 | 12 | 12 | 12 | 12 |
| Thickness | 200 *µ*m | 250 *µ*m | 300 *µ*m | 350 *µ*m | 400 *µ*m | 500 *µ*m | 600 *µ*m | 650 *µ*m | 700 *µ*m |
| Prosity | 45% | 45% | 45% | 45% | 45% | 45% | 45% | 45% | 45% |
| Resistance value | 29.8mΩ | 28.5mΩ | 18.7mΩ | 11.6mΩ | 9.1 mΩ | 12.5mΩ | 14.5mΩ | 24.4mΩ | 27.0mΩ |
| Voltage value | 0.451V | 0.468V | 0.608V | 0.621V | 0.639V | 0.625V | 0.612V | 0.548V | 0.469V |

| | | | | | | | | | |
|---|---|---|---|---|---|---|---|---|---|
| * Reference Sample | | | | | | | | | |

The blend ration of acetylene black ti graphite was fixed to 1:2 and the thickness of gas diffusion layers was varied; Table 2 is a table showing the resistance value and the voltage value of the fuel call at the time of the variation. The porosity was constantly 45% since the porosity is decided in accordance with the blend ratio. Fuel cell samples 8 to 16 different from each other in the thickness of the gas diffusion layers were produced as described below, and then the resistance value and the voltage value of each of the samples were measured. The method for measuring the resistance value and the voltage value are equivalent to that for measuring the resistance value and the voltage value of each of samples 1 to 7.

Hereinafter, a description will be made about a process for producing the fuel cell common to the individual samples. The same steps as in the process for producing samples 1 to 7 described in connection with Table 1 will be described with the omission of any overlapping description.

First, into a mixer are charged 50 g of acetylene black, 100g of graphite, 7.5 g of a surfactant, and 170 g of water. Thereafter, the rotation number of the mixer is set to 100 rpm, and the individual materials are kneaded for 60 minutes. After the lapse of the 60 minutes, 35 g of a PTFE dispersion is incorporated, as the polymeric resin, into the kneadedproduct yielded by the kneading, and further the mixture is stirred for 5 minutes.

The thus-yielded kneaded product is taken out from the mixer. The gap in a drawing roller is adjusted to roll the taken-out product into a sheet form. Thereafter, the sheet-form kneaded product is fired at 300°C in a program-controlled firing furnace for 30 minutes to remove the surfactant and water in the kneaded product.

The kneaded product, from which the surfactant and water have been removed, is taken out from the firing furnace. The gap in the drawing roller is again adjusted to roll the product into a sheet form, thereby adjusting the thickness and decreasing a scatter in the thickness. Thereafter, the re-rolled kneaded product is cut into pieces 6 cm square, so as to form rubbery gas diffusion layers.

At the same time of the formation of the gas diffusion layers, or after the formation, a mixture of a platinum-carried carbon and an ion exchange resin is painted, as a catalyst layer, onto each surface of a polymer electrolyte membrane. Thereafter, the mixture is dried to yieldamembrane/catalyst-layer assembly.

Next, the gas diffusion layers formed as described above are arranged on both surfaces of the membrane/catalyst-layer assembly, respectively, and then these elements are hot-pressed to be bonded to each other, thereby producing an MEA. Thereafter, the produced MEA is sandwiched between a pair of separators. In this state, the workpiece is pressed until the fastening pressure turns to 10 kgf/cm² in such a manner that the individual elements will not get out of position.

In the way described above, each fuel cell single-cell is produced.

Samples 8 to 16 can be produced by changing the gap in the drawing roller at the time of the rolling.

When the resistance value and the voltage value of sample 10, wherein the thickness is 300 µm, is compared with those 9, wherein the thickness is 250 µm, with reference to Table 2, it is understood that in sample 9, the resistance value is far higher and the voltage value is far lower. A reason therefor is considered as follows: the thickness becomes small, whereby the gas permeability of the gas diffusion layers is improved so that the water-retaining performance (humidity-retaining performance) lowers when the fuel cell is driven at a low humidity; thus, the polymer electrolyte membrane is dried so that the membrane resistance increases.

When the resistance value and the voltage value of sample 14, wherein the thickness is 600 µm, is compared with those of sample 15, wherein the thickness is 650 µm, with reference to Table 2, it is understood that in sample 15, the resistance value is far higher and the voltage value is far lower. A reason therefor is considered as follows: the thickness becomes large, whereby the internal resistance (electrical conduction resistance) of the gas diffusion layers is increased; and further by the increase in the thickness, the gas permeability of the gas diffusion layers is lowered so that the fuel gas and the oxidizer gas do not easily reach the catalyst layers, respectively, whereby a sufficient electrochemical reaction is not caused.

From the above-mentioned test results and consideration, therefore, the thickness of the gas diffusion layers would be preferably 300 µm or more and 600 or less. Considering the voltage value of each of the samples in Table 2, the thickness of the gas diffusion layers would be more preferably 350 µm or more and 500 µm or less.

When gas diffusion layers having the same blend ratio, thickness, and porosity as the gas diffusion layers of sample 2 were formed by two formation methods different from the formation method for sample 2, and then the resistance value and the voltage value of a fuel cell having the gas diffusion layers were measured. It was verified that the resistance value and the voltage value were equal to those of sample 2.

One of the formationmethods is specifically a method described below.

First, an extruder (biaxial full-flight screw length: 50 cm, T die width: 7 cm, and gap: 600 µm) is used instead of the drawing roller to shape the kneaded product yielded by the kneading in the mixer into the form of a sheet having a thickness of 600 µm and a width of 7 cm. Thereafter, the sheet-form kneaded product is fired at 300°C in a program-controlled firing furnace for 30 minutes to remove the surfactant and water in the kneaded product.

The kneaded product, from which the surfactant and water has been removed, is taken out from the firing furnace. The gap in the drawing roller is adjusted to 400 µm, and the kneaded product is again rolled, so as to adjust the thickness and decrease a scatter in the thickness. Thereafter, the re-rolled kneaded product is cut into pieces 6 cm square. In such a way, rubbery gas diffusion layers having a thickness of 400 µm and a porosity of 42% were formed in the same manner as in sample 2.

The other formation method is specifically a method described below.

First, an extruder (biaxial full-flight screw length: 100 cm, T die width: 7 cm, and gap: 600 µm) is used instead of the mixer to knead and extrude a material having the same composition as sample 2 and then shape the extruded material into a sheet form. Thereafter, the sheet-form kneaded product is fired at 300°C in a program-controlled firing furnace for 30 minutes to remove the surfactant and water in the kneaded product.

The kneaded product, from which the surfactant and water has been removed, is taken out from the firing furnace. The gap in the drawing roller is adjusted to 400 µm, and the kneaded product is again rolled, so as to adjust the thickness and decrease a scatter in the thickness. Thereafter, the re-rolled kneaded product is cut into pieces 6 cm square. In such a way, rubbery gas diffusion layers having a thickness of 400 µm and a porosity of 42% were formed in the same manner as in sample 2.

### (About the blend ratio of the carbon fiber)

Using Table 3, the following will describe a preferred blend ratio of the carbon fiber. In this experiment, the anode gas diffusion layer and the cathode gas diffusion layer are formed to have the same structure (the thickness, the porosity, and others).

**Table 3**

| | Sample 17 | Sample 18 | Sample 19 | Sample 20 | Sample 21 | Sample 22 | Sample 23 |
|---|---|---|---|---|---|---|---|
| Blend ratio of VGCF | 1.5% | 2.0% | 4.0% | 6.0% | 7.5% | 8.5% | 10.0% |
| Blend ratio of PTFE | 10% | 10% | 10% | 10% | 10% | 10% | 10% |
| Thickness | 400*µ*m | 400*µ*m | 400*µ*m | 400*µ*m | 400*µ*m | 400*µ*m | 400*µ*m |
| Internal resistance values | 77mΩ · cm² | 50mΩ · cm² | 49mΩ · cm² | 45mΩ · cm² | 40mΩ · cm² | 40mΩ · cm² | 40mΩ · cm² |
| Membrane damage (micro short circuit) | Not generated | Not generated | Not generated | Not generated | Not generated | Generated | Generated |

The thickness of the gas diffusion layers was fixed to 400 µm, the blend ratio of PTFE as an example of the polumeric resin was set to 10%, and the blend ration of VGCF as an example of the carbon fiber was varied; table 3 is a table showing the internal resistance value and the whether or not a damage (micro short circuit) of the polymer electrolyte membrane was generated at the time of the variation. In this experiment, samples 17 to 23 of the gas diffusion layers different from each other in the blend ratio of VGCF were formed as described below, and then examinations were made about the internal resistance value of the gas diffusion layers of each of samples 17 to 23, and whether or not the (related) polymer electrolyte membrane was damaged. Since carbon fiber is usually made of a harder material than any polymer electrolyte membrane, it is feared that carbon fiber is stuck into the polymer electrolyte membrane in accordance with the blend ratio of carbon fiber, so as to damage the polymer electrolyte membrane. The damage of the polymer electrolyte membrane may cause a fall in the endurance of the fuel cell. Thus, Table 3 shows whether or not the polymer electrolyte membrane was damaged.

The following will describe a process for forming the gas diffusion layers common to individual samples 17 to 23.

First, into a mixer are charged acetylene black (registeredtradename: DENKABLACK, manufactured by Denki Kagaku Kogyo Kabushiki Kaisha) as an example of the conductive particles small in average particle diameter, graphite (manufactured by Wako Pure Chemical Industries, Ltd.) as an example of the conductive particles large in average particle diameter, VGCF (manufactured by Showa Denko K.K., fiber diameter: 0.15 µm, and fiber length: 15 µm), 4 g of a surfactant (registered trade name: Triton X), and 200 g of water as an example of the dispersing solvent. At this time, the total amount of acetylene black, graphite, and VGCF is set to 133 g, and the blend ratio of acetylene back to graphite is set to 1:1.6.

After the individual materials are charged into the mixer, the rotation number of the mixer is set to 100 rpm, and the individual materials are kneaded for 60 minutes. After the lapse of the 60 minutes, 25 g of a PTFE dispersion (AD 911, manufactured by Asahi Glass Co., Ltd., solid content by percentage: 60%) is incorporated, as the polymeric resin, into the kneaded product yielded by the kneading, and further the mixture is stirred for 5 minutes.

The thus-yielded kneaded product is taken out in an amount of 20 g from the mixer. A drawing roller (the gap therein is set to 600 µm) is used to roll the kneaded product into a sheet form. Thereafter, the sheet-form kneaded product is fired at 300°C in a program-controlled firing furnace for 2 hours to remove the surfactant and water in the kneaded product.

The kneaded product, from which the surfactant and water have been removed, is taken out from the firing furnace. The drawing roller (gap: 400 µm) is again used to roll the product, thereby adjusting the thickness and decreasing a scatter in the thickness. Thereafter, the re-rolled kneaded product is cut into pieces 6 cm square. In this way, rubbery gas diffusion layers 400 µm in thickness are formed.

Samples 17 to 23 can be formed only by varying the blend ratio of VGCF.

In, for example, sample 18, the amounts of acetylene black, graphite, and VGCF are set to 50 g, 80 g, and 3 g, respectively. In this case, the blend ratio (by weight) of VGCF and the blend ratio (by weight) of PTFE can be calculated as follows:
The blend ratio of VGCF: VGCF 3 g/ (acetylene black 50 g + graphite 80 g + VGCF 3 g + PTFE 25 g x 60%) x 100 = about 2.0%; and
the blend ratio of PTFE: PTFE 25 g x 60%/ (acetylene black 50 g + graphite 80 g + VGCF 3 g + PTFE 25 g x 60%) x 100 = about 10.0 %.

The following will describe a method for measuring the internal resistance (electroconductivity) of the gas diffusion layers of each of samples 17 to 23 shown in Table 3.

First, a mold is used to make each of the samples into a shape having a diameter of 4 cm.

Next, a compression test machine (EZ-graph, manufactured by Shimadzu Corp.) is used to apply a compression load to the sample to give a pressure (plane pressure) of 1.5 kg/cm² thereto.

In this state, an AC four-terminal method type resistance meter (MODEL 3566, manufactured by Tsuruga Electric Corp.) is used to measure the internal resistance.

The following will describe a method for judging whether or not a damage is generated in the polymer electrolyte membrane to which the gas diffusion layers of each of samples 17 to 23 shown in Table 3 are attached.

In order to judge whether or not the polymer electrolyte membrane is damaged, a pseudo-fuel cell (having no catalyst layer) is first produced about each of the samples. Specifically, a pair of specimens having the same blend ratio of VGCF are arranged onto both surfaces of the polymer electrolyte membrane which is a polymer electrolyte membrane (registered trade name: Nafion 112, manufactured by Dupont), respectively, and the members are hot-pressed to be bonded to each other (at 80°C and 10 kgf/cm²), thereby producing an MEA. Thereafter, the produced MEA is sandwiched between a pair of separators (manufactured by Tokai Carbon Co., Ltd.). In this state, the workpiece is pressed until the fastening pressure turns to 10 kgf/cm² in such a manner that the individual elements will not get out of position. In this way, the pseudo-fuel cell is produced.

Next, an electrochemical measuring system (HZ-3000, manufactured by Hokuto Denko Corp.) is connected to the pseudo-fuel cell produced as described above.

Next, a load of 0.4 V is applied to the pseudo-fuel cell. At this time, the current value is measured.

When the polymer electrolyte membrane is damaged, it appears that a high current of 300 mA or more is measured by a micro short circuit.

Thus, when the measured current value is 300 mA or more, a damage is judged to be "generated". When the measured current value is less than 300 mA, a damage is judged not to be generated ("not generated").

About the test results measured or judged as described above, a consideration will be described hereinafter.

When the internal resistance values of samples 17 to 23 are compared with each other with reference to Table 3, it is understood that as the blend ratio of VGCF is lower, the internal resistance value is larger. When sample 18, wherein the blend ratio of VGCF is 2.0% by weight, is compared with sample 17, wherein the blend ratio of VGCF is 1.5% by weight, it is understood that the internal resistance value is largelychanged. In other words, it is understood that when the blend ratio of VGCF turns lower than 2.0% by weight, the internal resistance value is abruptly raised. Thus, the blend ratio of VGCF would be preferably 2.0% or more by weight.

An investigation is made as to whether or not each of the polymer electrolyte membranes was damaged with reference to Table 3. In the pseudo-fuel cell using each of samples 17 to 21, wherein the blend ratio of VGCF was 7.5% or less by weight, the polymer electrolyte membrane was not damaged. By contrast, in the pseudo-fuel cell using each of samples 22 and 23, wherein the blend ratio of VGCF was more than 7.5% by weight, the polymer electrolyte membrane was damaged.

From the above-mentioned test results and consideration, therefore, the blend ratio of VGCF would be preferably 2.0% or more by weight and 7.5% or less by weight.

Gas diffusion layers were formed in the same way for forming sample 18 except that a chopped fiber (M-201F, manufactured by Kureha Chemical Industry Co., Ltd., fiber diameter: 12.5 µm, and fiber length: 150 µm) was used instead of VGCF, and then examinations were made about the internal resistance value of the gas diffusion layers and whether or not the polymer electrolyte membrane was damaged. As a result, results equivalent to those of sample 18 were obtained. In other words, the internal resistance value was 50 mΩcm², and the polymer electrolyte membrane was not damaged. In the case of using, instead of VGCF, a milled fiber (M-2007S, manufactured by Kureha Chemical Industry Co., Ltd., fiber diameter: 14.5 µm, and fiber length: 90 µm), a cut fiber (T008-3, manufactured by Toray Industries, Inc., fiber diameter: 7 µm), or a milled fiber (MLD-30, manufactured by Toray Industries, Inc., fiber diameter: 7 µm, and fiber length: 30 µm), the same results as sample 18 were obtained.

### (About the blend ratio of the polymeric resin)

Using Table 4, the following will describe a preferredblend ratio of the polymeric resin. In this experiment, the anode gas diffusion layer and the cathode gas diffusion layer are formed to have the same structure (the thickness, the porosity and others).

**Table 4**

| | Sample 24 | Sample 25 | Sample 26 | Sample 27 | Sample 28 | Sample 29 |
|---|---|---|---|---|---|---|
| Blend ratio of VGCF | 2.0% | 2.0% | 2.0% | 2.0% | 2.0% | 2.0% |
| Blend ratio of PTFE | 10% | 12.5% | 15% | 17% | 20% | 26% |
| Thickness | 400 *µ*m | 400 *µ*m | 400 *µ*m | 400 *µ*m | 400 *µ*m | 400 *µ*m |
| Internal resistance value | 50mΩ·cm² | 52mΩ·cm² | 57mΩ·cm² | 60mΩ·cm² | 78mΩ·cm² | 92mΩ·cm² |
| Membrane damage (micro short circuit) | Not generated | Not generated | Not generated | Not generated | Not generated | Not generated |

The thickness of the gas diffusion layers was fixed to 400 µm, the blend ratio of VGCF as an example of the carbon fiber was set to 2.0% by weight, and the blend ratio of PTFE as an example of the polymeric resin was varied; Table 4 is a table showing the internal resistance value and whether or not a damage of the polymer electrolyte membrane was generated at the time of the variation. The gas diffusion layers of samples 24 to 29 were formed in the same way for forming sample 18, which has been described in connection with Table 3, except that the blend amount of the PTFE dispersion was varied. The method for measuring the internal resistance value and the method for judging whether or not the polymer electrolyte membrane was damaged were equivalent to the method for measuring the internal resistance value of each of samples 17 to 23 and the method for judging whether or not the polymer electrolyte membrane was damaged, which have been described in connection with Table 3.

About the test results measured or judged as described above, a consideration will be described hereinafter.

When the internal resistance values of samples 24 to 29 are compared with each other with reference to Table 4, it is understood that as the blend ratio of PTFE is higher, the internal resistance value is larger. When sample 27, wherein the blend ratio of PTFE is 17% by weight, is compared with sample 28, wherein the blend ratio of PTFE is 20% by weight, it is understoodthat the internal resistance value is largelychanged. In other words, it is understood that when the blend ratio of PTFE turns higher than 17% by weight, the internal resistance value is abruptly raised.

An attempt was made for forming a sheet-form gas diffusion layer wherein the blend ratio of PTFE was less than 10% by weight. However, the gas diffusion layer was unable to be formed even when the blend ratio of VGCF, the kneading period, the kneading rate, the rolling conditions, and others were changed. A reason therefor is considered as follows: when the blend ratio of PTFE is lowered, the function of PTFE as a binder is weakened so that the bondability of the conductive materials between each other is lowered.

From the above-mentioned test results and consideration, therefore, the blend ratio of PTFE would be preferably 10% or more by weight and 17% or less by weight.

As to whether or not the polymer electrolyte membrane was damaged, inanyoneof samples 24 to 29, the polymer electrolyte membrane was not damaged. From this matter, it is understood that whether or not the polymer electrolyte membrane is damaged is not affected by the blend ratio of PTFE.

### (About the thickness)

Using Table 5, the following will describe a preferred thickness of gas diffusion layers to which the carbon fiber is added. In this experiment, the anode gas diffusion layer and the cathode gas diffusion layer are formed to have the same structure (the thickness, the porosity, and others).

**Table 5**

| | Sample 30 | Sample 31 | Sample 32 | Sample 33 * | Sample 34 * | Sample 35 * |
|---|---|---|---|---|---|---|
| Blend ratio of VGCF | 2.0% | 2.0% | 2.0% | 20% | 2.0% | 2.0% |
| Blend ratios of PTFE | 10% | 10% | 10% | 10% | 10% | 10% |
| Thickness | 150 *µ*m | 200 *µ*m | 400 *µ*m | 600 *µ*m | 650 *µ*m | 700 *µ*m |
| Internal resistance value | 33mΩ·cm² | 42mΩ·cm² | 51mΩ·cm² | 59mΩ·cm² | 74mΩ·cm² | 80mΩ·cm² |
| Membrare damage (micro short circuit) | Not generated | Not generated | Not generated | Not generated | Not generated | Not generated |

| | | | | | | |
|---|---|---|---|---|---|---|
| * Reference Sample | | | | | | |

The blend ratio of VGCF as an example of the carbon fiber was set to 2.0% by weight, the blend ratio of PTFE as an example of the polymeric resin was set to 10% by weight, and the thickness of the gas diffusion layers was varied; Table 5 is a table showing the internal resistance value, and whether or not the polymer electrolyte membrane was damaged at the time of the variation. Samples 30 to 35 of the gas diffusion layers different from each other in thickness were formed as described below, and then examinations were made about the internal resistance value of each of the samples, and whether or not the polymer electrolyte membrane was damaged. The method for measuring the internal resistance value and the method for judging whether or not the polymer electrolyte membrane was damaged were equivalent to the method for measuring the internal resistance value of each of samples 17 to 23 and the method for judging whether or not the polymer electrolyte membrane was damaged, which have been described in connection with Table 3.

Hereinafter, a description will be made about a process for forming the gas diffusion layers common to the individual samples. The same steps as in the process for producing the samples 17 to 23 described in connection with Table 3 will be described with the omission of any overlapping description.

First, into a mixer are charged 50 g of acetylene black, 80 g of graphite, 3 g of VGCF, 4 g of a surfactant, and 200 g of water. After the individual materials are charged into the mixer, the rotation number of the mixer is set to 100 rpm, and the individual materials are kneaded for 60 minutes. After the lapse of the 60 minutes, 25 g of a PTFE dispersion is incorporated into the kneaded product yielded by the kneading, and further the mixture is stirred for 5 minutes.

The thus-yielded kneaded product is taken out from the mixer, and the gap in a drawing roller is adjusted to roll the product into a sheet form. Thereafter, the sheet-form kneaded product is fired at 300°C in a program-controlled firing furnace for 2 hours to remove the surfactant and water in the kneaded product.

The kneaded product, from which the surfactant and water has been removed, is taken out from the firing furnace, and the gap in the drawing roller is again adjusted to roll the product, thereby adjusting the thickness and decreasing a scatter in the thickness. Thereafter, the resultant is cut into pieces 6 cm square.

As described above, rubbery gas diffusion layers are formed.

Samples 30 to 35 can be produced by varying the gap in the drawing roller at the time of the rolling.

About the test results measured or judged as described above, a consideration will be described hereinafter.

When the internal resistance values of samples 30 to 35 are compared with each other with reference to Table 5, it is understood that as the thickness of the gas diffusion layers is larger, the internal resistance value is larger. When sample 33, wherein the thickness is 600 µm, is compared with sample 34, wherein the thickness is 650 µm, it is understood that in sample 34, the internal resistance value is largely higher. An attempt was made for forming a sheet-form gas diffusion layer wherein the thickness was less than 150 µm. However, the resultant was short in strength; thus, the internal resistance was unable to be stably measured. Even when the layer can be formed, the gas permeability of the gas diffusion layer is improved since the thickness is made small; it is therefore presumed that when the fuel cell is driven at a low humidity, the water-retaining performance (humidity-retaining performance) is lowered so that its polymer electrolyte membrane is dried, whereby the internal resistance increases.

From the above-mentioned test results and consideration, therefore, the thickness of the gas diffusion layers would be preferably 150 µm or more, and 600 µm or less.

As to whether or not the polymer electrolyte membrane was damaged, in any one of samples 30 to 35, the polymer electrolyte membrane was not damaged. From this matter, it is understood that whether or not the polymer electrolyte membrane is damaged is not affected by the thickness of the gas diffusion layers.

By two formation methods different from the formation method for sample 18, gas diffusion layers were formed which were equivalent to the gas diffusion layers of sample 18 in blend ratio (2.0% by weight) of VGCF, blend ratio (10% by weight) of PTFE, and thickness (400 µm), and then examinations were made about the internal resistance and whether or not the polymer electrolyte membrane was damaged. As a result, the same results as in sample 18 were obtained. In other words, the internal resistance was 50 mΩ·cm², and the polymer electrolyte membrane was not damaged.

One of the formationmethods is specifically a method described below.

First, an extruder (biaxial full-flight screw length: 50 cm, T die width: 7 cm, and gap: 600 µm) is used instead of the drawing roller to shape the kneaded product yielded by the kneading in the mixer into the form of a sheet having a thickness of 600 µm and a width of 7 cm. Thereafter, the sheet-form kneaded product is fired at 300°C in a program-controlled firing furnace for 30 minutes to remove the surfactant and water in the kneaded product.

The kneaded product, from which the surfactant and water has been removed, is taken out from the firing furnace. The gap in the drawing roller is adjusted to 400 µm, and the kneaded product is again rolled, so as to adjust the thickness and decrease a scatter in the thickness. Thereafter, the re-rolled kneaded product is cut into pieces 6 cm square. In such a way, gas diffusion layers were yielded which had the same blend ratio of VGCF, blend ratio of PTFE, and thickness as sample 18.

The other formation method is specifically a method described below.

First, an extruder (biaxial full-flight screw length: 100 cm, T die width: 7 cm, and gap: 600 µm) is used instead of the mixer to knead and extrude a material having the same composition as sample 18 and then shape the extruded material into a sheet form. Thereafter, the sheet-form kneaded product is fired at 300°C in a program-controlled firing furnace for 30 minutes to remove the surfactant and water in the kneaded product.

The kneaded product, from which the surfactant and water has been removed, is taken out from the firing furnace. The gap in the drawing roller is adjusted to 400 µm, and the kneaded product is again rolled, so as to adjust the thickness and decrease a scatter in the thickness. Thereafter, the re-rolled kneaded product is cut into pieces 6 cm square. In such a way, gas diffusion layers were yielded which had the same blend ratio of VGCF, blend ratio of PTFE, and thickness as sample 18.

An attempt was made for decreasing the blend amount of PTFE without using any carbon fiber. As a result, when the blend ratio of PTFE was 20% by weight, sheet-form gas diffusion layers were able to be formed in the same way for producing the above-mentioned individual samples. However, the internal resistance value of the gas diffusion layers was higher than the internal resistance value (78 mΩ·cm²) of sample 28, wherein the blend ratio was 20% by weight. From this matter, it is understood that the use of carbon fiber produces an advantageous effect for restraining an increase in the internal resistance value.

Although the attempt was made for decreasing the blend amount of PTFE without using any carbon fiber, the strength of the sheet-form gas diffusion layers were unable to be sufficiently kept. In other words, when the carbon fiber was used, the blend ratio of PTFE was able to be set to less than 20% by weight; however, when no carbon fiber was used, the blend ratio of PTFE was unable to be set to less than 20% by weight. From this matter, it is understood that the use of carbon fiber produces an advantageous effect for promoting the strength of sheet-form gas diffusion layers.

The following will describe verification results of the power generating performance of fuel cells according to the embodiment.

First, using Table 6, a description will be made about verification results of the power generating performance based on a difference in porosity between the anode gas diffusion layer 14A and the cathode gas diffusion layer 14C.

**Table 6**

| | Items | Sample 36 | Sample 37 | Sample 38 | Sample 39 |
|---|---|---|---|---|---|
| Anode gas diffusion layer | Polymeric resin | 12% | 17% | 17% | 12% |
| | Carbon fiber | 3.9% | 4.0% | 4.0% | 3.9% |
| | **Porosity** | **55%** | **70%** | **70%** | **55%** |
| Cathode gas diffusion layer | Polymeric resin | 17% | 17% | 12% | 12% |
| | Carbon fiber | 4.0% | 4.0% | 3.9% | 3.9% |
| | **Porosity** | **70%** | **70%** | **55%** | **55%** |
| **Voltage value** | | **0.722V** | **0.716V** | **0.713V** | **0.715V** |

In Table 6, sample 36 is a fuel cell according to the embodiment, and samples 37 to 39 are fuel cells produced as comparative examples. Samples 36 to 39 are fuel cells in each of which two gas diffusion layers, one thereof being a gas diffusion layer having a porosity of 55% and the other being a gas diffusion layer having a porosity of 70%, are prepared and these layers are combined with each other. Specifically, sample 36 is a fuel cell wherein a gas diffusion layer having a porosity of 55% is used as the anode gas diffusion layer 14A and a gas diffusion layer having a porosity of 70% is used as the cathode gas diffusion layer 14C. Sample 37 is a fuel cell wherein a gas diffusion layer having a porosity of 70% is used as the anode gas diffusion layer 14A and a gas diffusion layer having a porosity of 70% is used as the cathode gas diffusion layer 14C. Sample 38 is a fuel cell wherein a gas diffusion layer having a porosity of 70% is used as the anode gas diffusion layer 14A and a gas diffusion layer having a porosity of 55% is used as the cathode gas diffusion layer 14C. Sample 39 is a fuel cell wherein a gas diffusion layer having a porosity of 55% is used as the anode gas diffusion layer 14A and a gas diffusion layer having a porosity of 55% is used as the cathode gas diffusion layer 14C. The thickness of any one of the gas diffusion layers is set to 400 µm.

The gas diffusion layers having the thickness of 400 µm and the porosity of 55%, that is, the anode gas diffusion layers 14A of samples 36 and 39, and the cathode gas diffusion layers of samples 38 and 39 are formed as follows:
Into a planetary mixer are charged 50 g of acetylene black (registered trade name: DENKA BLACK, manufactured by Denki Kagaku Kogyo Kabushiki Kaisha, particle diameter D₅₀ = 5 µm) as an example of the conductive particles small in average particle diameter, 100 g of artificial graphite powder (SCMG-AR, manufactured by Showa Denko K.K., D₅₀ = 20 µm) as an example of the conductive particles large in average particle diameter, 2 g of VGCF (manufactured by Showa Denko K.K., fiber diameter: 0.15µm, and fiber length: 15µm), 12 gof a surfactant (registered trade name: Triton X), and 500 g of water as an example of the dispersing solvent.

After the individual materials are charged into the planetary mixer, the rotation number of the planetary mixer is set to 100 rpm, and the individual materials are kneaded for 60 minutes. After the lapse of the 60 minutes, 35 g of a PTFE dispersion (AD 911, manufactured by Asahi Glass Co., Ltd., solid content by percentage: 60%) is incorporated, as the polymeric resin, into the kneaded product yielded by the kneading. Furthermore, the rotation number of the planetary mixer is set to 100 rpm, and the mixture is stirred for 5 minutes.

The thus-yielded kneaded product is taken out in an amount of 20 g from the planetary mixer. A drawing roller (the pressure and the gap therein are set to 200 kg/cm² and 600 µm, respectively) is used to roll the kneaded product into a sheet form. Thereafter, the sheet-form kneaded product is fired at 300°C in a program-controlled firing furnace for 20 minutes to remove the surfactant and water in the kneaded product.

The kneaded product, from which the surfactant and water have been removed, is taken out from the firing furnace. The drawing roller (pressure: 500 kg/cm², and gap: 380 µm) is again used to roll the product, thereby adjusting the thickness and decreasing a scatter in the thickness. Thereafter, the re-rolled kneaded product is cut into pieces 6 cm square.

In this way, gas diffusion layers having a thickness of 400 µm and a porosity of 55% can be yielded.

The blend ratio of the carbon fiber (VGCF) in each of the formed gas diffusion layers was obtained by calculation. As a result, the ratio in the whole of the sheet was 3.9% (by weight). The blend ratio of PTFE in each of the formed gas diffusion layers was obtained by calculation. As a result, the ratio was 12% (by weight).

The gas diffusion layers having the porosity of 70%, that is, the anode gas diffusion layers 14A of samples 37 and 38, and the cathode gas diffusion layers 14C of samples 36 and 37 are produced as follows:
First, into a mixer are charged 100 g of acetylene black (registered trade name: DENKA BLACK, manufactured by Denki Kagaku Kogyo Kabushiki Kaisha) as an example of the conductive particles, 5 g of VGCF (manufactured by Showa Denko K.K., fiber diameter: 0.15 µm, and fiber length: 15 µm), 12 g of a surfactant (registered trade name: TritonX), and 500 g of water as an example of the dispersing solvent. The used carbon powder is of only one type.

After the individual materials are charged into the mixer, the rotation number of the mixer is set to 100 rpm, and the individual materials are kneaded for 60 minutes. After the lapse of the 60 minutes, 35 g of a PTFE dispersion (AD 911, manufactured by Asahi Glass Co., Ltd., solid content by percentage: 60%) is incorporated, as the polymeric resin, into the kneaded product yielded by the kneading. Furthermore, the rotation number of the mixer is set to 100 rpm, and the mixture is stirred for 5 minutes.

The thus-yielded kneaded product is taken out in an amount of 10 g from the mixer. A drawing roller (the pressure and the gap therein are set to 10 kg/cm² and 500 µm, respectively) is used to roll the kneaded product into a sheet form. Thereafter, the sheet-form kneaded product is fired at 300°C in a program-controlled firing furnace for 20 minutes to remove the surfactant and water in the kneaded product.

The kneaded product, from which the surfactant and water have been removed, is taken out from the firing furnace. The drawing roller (pressure: 20 kg/cm², and gap: 400 µm) is again used to roll the product, thereby adjusting the thickness and decreasing a scatter in the thickness. Thereafter, the re-rolled kneaded product is cut into pieces 6 cm square.

In this way, gas diffusion layers having a thickness of 400 µm and a porosity of 70% can be yielded.

The blend ratio of the carbon fiber (VGCF) in each of the formed gas diffusion layers was obtained by calculation. As a result, the ratio in the whole of the sheet was 4.0% (by weight). The blend ratio of PTFE in each of the formed gas diffusion layers was obtained by calculation. As a result, the ratio was 17% (by weight).

The following will describe a process for producing the fuel cell of each of samples 36 to 39 by use of the gas diffusion layers having the porosity of 55% and 70% formed as described above.

A mixture of platinum-carried carbon (TEC10E50E, manufactured by Tanaka Kikinzoku Kogyo K.K.) and an ion exchange resin (registered trade name: Flemion, manufactured by Asahi Glass Co. , Ltd.) is painted, as a catalyst layer, onto each surface of a polymer electrolyte membrane (registered trade name: Nafion 112, manufactured by Dupont). Thereafter, the mixture is dried to yield a membrane/catalyst-layer assembly. At this time, the size of the polymer electrolyte membrane is set to 15 cm square. The size of the catalyst layers is set to 5.8 cm square. The use amount of platinum is set to 0.35 mg/cm² on the anode electrode side, and set to 0.6 mg/cm² on the cathode electrode side.

Next, the gas diffusion layers having the porosity of 55% or 70% formed as described above are arranged on both surfaces of the membrane/catalyst-layer assembly, respectively, thereby producing an MEA.

Next, the produced MEA is sandwiched between a pair of separators (manufactured by Tokai Carbon Co., Ltd.). In this state, the workpiece is pressed until the fastening pressure turns to 10 kgf/cm² in such a manner that the individual elements will not get out of position.

In the way described above, each of the fuel cell of samples 36 to 39 is produced.

The following will describe a method for measuring the voltage value of each of samples 36 to 39, which is shown in Table 6.

An electron load device (PLZ-4W, manufactured by Kikusui Electronics Corp.) is first connected to each of the samples. Pure hydrogen is caused to flow, as a fuel gas, into the anode electrode while air is caused to flow, as an oxidizer gas, into the cathode electrode. At this time, the availability ratios thereof are 70% and 40%, respectively. About the anode electrode, and the cathode electrode, the gas humidification points are set to 65°C and 35°C, respectively. The cell temperature is set to 90°C.

Next, when the current density is 0.2 A/cm², the voltage value is measured.

As described above, the voltage value of each of samples 36 to 39 shown in Table 6 was obtained.

As understood from Table 6, in sample 36 having the fuel cell structure according to the embodiment, the highest voltage value was able to be obtained. In other words, it was verified that any fuel cell according to the embodiment makes it possible to make the power generating performance even better than fuel cells in the related art.

In the above, samples 36 to 39 were produced using VGCF as the carbon fiber; however, the same voltage value was obtained also when samples 36 to 39 were produced using, instead of VGCF, a chopped fiber (M-201F, manufactured by Kureha Chemical Industry Co., Ltd., fiber diameter: 12.5 µm, and fiber length: 150 µm), a milled fiber (M-2007S, manufactured by Kureha Chemical Industry Co., Ltd., fiber diameter: 14.5 µm, and fiber length: 90 µm), or a cut fiber (T008-3, manufactured by Toray Industries, Inc., fiber diameter: 7 µm).

In the above, the drawing roller was used to shape the kneaded product obtained by the kneading in the planetary mixer into the sheet form; however, the same voltage value was obtained also when the kneaded product was shaped into a sheet form, using, instead of the drawing roller, an extruder (biaxial full-flight screw, length: 50 cm, rotation number: 10 rpm, T die width: 7 cm, and gap: 600 µm).

In the above, the drawing roller was used to shape the kneaded product obtained by the kneading in the planetary mixer into the sheet form; the same voltage value was obtained also when the rawmaterials were directly charged into an extruder (biaxial full-flight screw kneading blade shape, length: 100 cm, T die width: 7 cm, and gap: 600 µm), and then the materials were kneaded, extruded and shaped into a sheet form.

Using Table 7, the following will describe a preferred thickness of the anode gas diffusion layer 14A and the cathode gas diffusion layer 14C.

**Table 7**

| | Items | Sample 36 * | Sample 40 | Sample 41 * | Sample 42 * | Sample 43 * |
|---|---|---|---|---|---|---|
| Anode gas diffusion layer | Thickness | 400 *µ*m | 400 *µ*m | 200 *µ*m | 200 *µ*m | 600 *µ*m |
| Cathode gas diffusion layer | Thickness | 400 *µ*m | 200 *µ*m | 200 *µ*m | 400 *µ*m | 200 *µ*m |
| **Voltage value** | | 0.722V | 0.724V | 0.721V | 0.713V | 0.715V |

| | | | | | | |
|---|---|---|---|---|---|---|
| * Reference Sample | | | | | | |

In Table 7, samples 40 to 43 are each a sample wherein the thickness of the anode gas diffusion layer 14A or the cathode gas diffusion layer 14C of sample 36 is changed to 200 µm or 600 µm. Accordingly, in samples 40 to 43, the porosity of the anode gas diffusion layer 14A is 55% and that of the cathode gas diffusion layer is 70%.

The gas diffusion layer having the thickness of 200 µm and the porosity of 55% can be formed as follows:
In the same way as in the case of the above-mentioned gas diffusion layer having the thickness of 400 µm and the porosity of 55%, in a planetary mixer, a kneaded product is produced which includes acetylene black, artificial graphite powder, VGCF, the surfactant, water, and the polymeric resin.

Next, the kneaded product is taken out in an amount of 10 g from the planetary mixer. A drawing roller (the pressure and the gap therein are set to 200 kg/cm² and 350 µm, respectively) is used to roll the kneaded product into a sheet form.

Next, the sheet-form kneaded product is fired at 300°C in a program-controlled firing furnace for 20 minutes to remove the surfactant and water in the kneaded product.

Next, the kneaded product, fromwhich the surfactant and water have been removed, is taken out from the firing furnace. The drawing roller (pressure: 500 kg/cm², and gap: 180 µm) is again used to roll the product, thereby adjusting the thickness and decreasing a scatter in the thickness. Thereafter, the re-rolled kneaded product is cut into pieces 6 cm square.

In this way, the gas diffusion layer, which has the thickness of 200 µm and the porosity of 55%, can be yielded.

The gas diffusion layer having the thickness of 600 µm and the porosity of 55% can be formed as follows:
In the same way as in the case of the gas diffusion layer having the thickness of 400 µm and the porosity of 55%, in a planetary mixer, a kneaded product is produced which includes acetylene black, artificial graphite powder, VGCF, the surfactant, water, and the polymeric resin.

Next, the kneaded product is taken out in an amount of 20 g from the planetary mixer. A drawing roller (the pressure and the gap therein are set to 200 kg/cm² and 850 µm, respectively) is used to roll the kneadedproduct into a sheet form. Thereafter, the sheet-form kneaded product is fired at 300°C in a program-controlled firing furnace for 20 minutes to remove the surfactant and water in the kneaded product.

The kneaded product, from which the surfactant and water have been removed, is taken out from the firing furnace. The drawing roller (pressure: 500 kg/cm², and gap: 580 µm) is again used to roll the product, thereby adjusting the thickness and decreasing a scatter in the thickness. Thereafter, the re-rolled kneaded product is cut into pieces 6 cm square.

In this way, the gas diffusion layer, which has the thickness of 600 µm and the porosity of 55%, can be yielded.

The gas diffusion layer having the thickness of 200 µm and the porosity of 70% can be formed as follows:
In the same way as in the case of the gas diffusion layer having the thickness of 400 µm and the porosity of 70%, in a mixer, a kneaded product is first produced which includes acetylene black, VGCF, the surfactant, water, and the polymeric resin.

Next, the kneaded product is taken out in an amount of 10 g from the planetary mixer. A drawing roller (the pressure and the gap therein are set to 10 kg/cm² and 300 µm, respectively) is used to roll the kneaded product into a sheet form.

Next, the sheet-form kneaded product is fired at 300°C in a program-controlled firing furnace for 20 minutes to remove the surfactant and water in the kneaded product.

Next, the kneaded product, fromwhich the surfactant and water have been removed, is taken out from the firing furnace. The drawing roller (pressure: 20 kg/cm², and gap: 200 µm) is again used to roll the product, thereby adjusting the thickness and decreasing a scatter in the thickness. Thereafter, the re-rolled kneaded product is cut into pieces 6 cm square.

In this way, the gas diffusion layer, which has the thickness of 200 µm and the porosity of 70%, can be yielded.

The gas diffusion layer having the thickness of 200 µm and the porosity of 70% can also be formed as follows:
First, into a mixer are charged 100g of acetylene black, 15 g of artificial graphite powder, 2 g of VGCF, 5 g of a chopped fiber (M201F, manufactured by Kureha Chemical Industry Co., Ltd., fiber diameter: 12.5 µm, and fiber length: 150 µm), 20 g of a surfactant (registered trade name: Triton X), and 400 g of water.

Next, the rotation number of the mixer is set to 100 rpm, and the individual materials are kneaded for 60 minutes. After the lapse of the 60 minutes, 36 g of a PTFE dispersion is incorporated, as the polymeric resin, into the kneadedproduct yielded by the kneading. Furthermore, the rotation number of the mixer is set to 100 rpm, and the mixture is stirred for 5 minutes. The used carbon powder is of two types.

The thus-yielded kneaded product is taken out in an amount of 10g from the mixer, and a drawing roller (the pressure and the gap therein are set to 10 kg/cm² and 300 µm, respectively) is used to roll the kneadedproduct into a sheet form. Thereafter, the sheet-form kneaded product is fired at 300°C in a program-controlled firing furnace for 20 minutes to remove the surfactant and water in the kneaded product.

The kneaded product, from which the surfactant and water has been removed, is taken out from the firing furnace, and the drawing roller (pressure: 20 kg/cm², and gap: 200 µm) is used to roll the product again, thereby adjusting the thickness and decreasing a scatter in the thickness. Thereafter, the resultant is cut into pieces 6 cm square.

In this way, the gas diffusion layer, which has the thickness of 200 µm and the porosity of 70%, can be yielded.

The blend ratio of the carbon fiber (the whole of VGCF and the chopped fiber) in each of the formed gas diffusion layers was obtained by calculation. As a result, the ratio in the whole of the sheet was 4.9% (by weight). The blend ratio of PTFE in each of the formed gas diffusion layers was obtained by calculation. As a result, the ratio was 15% (by weight).

The voltage value of each of samples 40 to 43 shown in Table 7 was a value measured under the same conditions for measuring the voltage value of each of samples 36 to 39 except that the availability ratio of air was set to 90%.

As understood from Table 7, in sample 40, a slightly higher voltage value was able to be obtained in sample 36. In other words, it was verified that by making the cathode gas diffusion layer 14C thinner than the anode gas diffusion layer 14A having the thickness of 400 µm, the power generating performance was made far better than in the related art. A reason therefor is considered as follows: it is ordinarily presumed that by making the cathode gas diffusion layer 14C thin, the power generating performance is declined; however, the gas diffusibility of the cathode gas diffusion layer 14C was made better than the decline of the power generating performance.

As also understood from Table 7, in sample 41, a voltage value substantially equal to that of sample 36 was able to be obtained. In other words, it was verified that even when both the thicknesses of the anode gas diffusion layer 14A and the cathode gas diffusion layer 14C were made small down to 200 µm, the power generating performance was hardly declined.

As also understood from Table 7, in sample 42, the voltage value was largely lowered as compared with that in sample 36. In other words, it was verified that by making the anode gas diffusion layer 14A thinner than the cathode gas diffusion layer 14C having the thickness of 400 µm, the power generating performance was declined. A reason therefor is considered as follows: the thickness of the anode gas diffusion layer 14A was small, whereby the water-retaining performance was declined, and further the thickness of the cathode gas diffusion layer 14C was larger, whereby the gas diffusibility was declined.

As also understood from Table 7, in sample 43, the voltage value was largely lowered as compared with that in sample 36. In other words, it was verified that by making the thickness of the anode gas diffusion layer 14A large up to 600 µm, the power generating performance was declined. A reason therefor is considered as follows : the thickness of the anode gas diffusion layer 14A was large, whereby the water-retaining performance was raised; however, the thickness was too large so that a decline in the power generating performance based on a decline in the gas diffusibility of the anode gas diffusion layer 14A exceeded the effect of an improvement in the power generating performance based on the rise in the water-retaining performance.

From Table 7, therefore, it is understood that the thickness of the anode gas diffusion layer 14A is preferably 200 µm or more and 400 µm or less, and the thickness of the cathode gas diffusion layer 14C is smaller than that of the anode gas diffusion layer 14A.

By properly combining the arbitrary embodiments of the aforementioned various embodiments the effects possessed by the embodiments can be produced.

### INDUSTRIAL APPLICABILITY

The membrane-electrode-assembly and the fuel cell according to the present invention make it possible to make the power generating performance better. Thus, the membrane-electrode-assembly and the fuel cell are useful as a fuel cell used as a driving source for a mobile body such as a car, a dispersed power generation system, a domestic cogeneration system, and others.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

### REFERENCE NUMBERS

- 1: fuel cell
- 10: membrane-electrode-assembly
- 11: polymer electrolyte membrane
- 12A: anode electrode
- 12C: cathode electrode
- 13A: anode catalyst layer
- 13C: cathode catalyst layer
- 14A: anode gas diffusion layer
- 14C: cathode gas diffusion layer
- 15A: anode gasket
- 15C: cathode gasket
- 20A: anode separator
- 20C: cathode separator
- 21A: fuel gap flow passage grooves
- 21C: oxidizer gas flow passage grooves

## Claims

1. A membrane-electrode-assembly, comprising:
a polymer electrolyte membrane;
a pair of catalyst layers opposed to each other to interpose the polymer electrolyte membrane there between; and
an anode gas diffusion layer and a cathode gas diffusion layer opposed to each other to interpose the polymer electrolyte membrane and the paired catalyst layers there between,
wherein the anode gas diffusion layer includes a porous member mainly including conductive particles and a polymeric resin,
a porosity of the anode gas diffusion layer is 60% or less,
a porosity of the cathode gas diffusion layer is larger than that of the anode gas diffusion layer, and
wherein a thickness of the cathode gas diffusion layer is smaller than that of the anode gas diffusion layer,
wherein the thickness of each of the anode gas diffusion layer and the cathode gas diffusion layer is 200 µm or more, and 400 µm or less.

2. The membrane-electrode-assembly according to claim 1, wherein the porosity of the anode gas diffusion layer is 42% or more.

3. The membrane-electrode-assembly according to claim 1 or 2, wherein the porosity of the cathode gas diffusion layer is more than 60%.

4. The membrane-electrode-assembly according to any one of claims 1 to 3 wherein the cathode gas diffusion layer comprises a porous member mainly including conductive particles and a polymeric resin.

5. The membrane-electrode-assembly according to claim 4, wherein the porosity of the cathode gas diffusion layer is 76% or less.

6. The membrane-electrode-assembly according to claim 4 or 5, wherein the conductive particles contained in each of the anode gas diffusion layer and the cathode gas diffusion layer comprise two kinds of carbon materials different from each other in average particle diameter.

7. The membrane-electrode-assembly according to claim 6, wherein about the two kinds of carbon materials contained in the anode gas diffusion layer, which are different from each other in average particle diameter, a blend ratio of the carbon material small in average particle diameter to the carbon material large in average particle diameter is from 1:0.7 to 1:2.

8. The membrane-electrode-assembly according to any one of claims 4 to 7, wherein a weight of the polymeric resin contained in the cathode gas diffusion layer is larger than that of the polymeric resin contained in the anode gas diffusion layer, each of the weights being weight per unit volume thereof.

9. The membrane-electrode-assembly according to claim 8, wherein the anode gas diffusion layer and the cathode gas diffusion layer contain the polymer resin in an amount of 10% or more by weight and 17% or less by weight.

10. The membrane-electrode-assembly according to any one of claims 4 to 9, wherein the anode gas diffusion layer and the cathode gas diffusion layer contain a carbon fiber in a weight smaller than a weight of the polymeric resin.

11. The membrane-electrode-assembly according to claim 10, wherein a weight of the carbon fiber contained in the cathode gas diffusion layer is larger than that of the carbon fiber contained in the anode gas diffusion layer, each of the weights being weight per unit volume thereof.

12. The membrane-electrode-assembly according to claim 11, wherein the anode gas diffusion layer and the cathode gas diffusion layer contain the carbon fiber in an amount of 2.0% or more by weight, and 7.5% or less by weight.

13. The membrane-electrode-assembly according to any one of claims 10 to 12, wherein the carbon fiber is any one of vapor growth process carbon fiber, milled fiber, and chopped fiber.

14. A fuel cell, comprising a membrane-electrode-assembly as recited in any one of claims 1 to 13, and a pair of separators arranged to interpose the membrane-electrode-assembly there between.

15. The fuel cell according to claim 14, wherein when the fuel cell is operated, dew points of a fuel gas and an oxidizer gas supplied to the fuel cell are lower than an operating temperature of the fuel cell.

## Patentansprüche

1. Membran-Elektroden-Anordnung, die umfasst:
eine Polymerelektrolyt-Membran;
ein Paar Katalysatorschichten, die einander gegenüberliegen und zwischen denen die Polymerelektrolyt-Membran angeordnet ist; sowie
eine Anodengas-Diffusionsschicht und eine Kathodengas-Diffusionsschicht, die einander gegenüberliegen und zwischen denen die Polymerelektrolyt-Membran sowie die paarigen Katalysatorschichten angeordnet sind,
wobei die Anodengas-Diffusionsschicht ein poröses Element enthält, das hauptsächlich leitende Teilchen und ein Polymerharz enthält,
eine Porosität der Anodengas-Diffusionsschicht 60 % oder weniger beträgt,
eine Porosität der Kathodengas-Diffusionsschicht größer ist als die der Anodengas-Diffusionsschicht, und
eine Dicke der Kathodengas-Diffusionsschicht kleiner ist als die der Anodengas-Diffusionsschicht,
die Dicke der Anodengas-Diffusionsschicht und der Kathodengas-Diffusionsschicht jeweils 200 µm oder mehr und 400 µm oder weniger beträgt.

2. Membran-Elektroden-Anordnung nach Anspruch 1, wobei die Porosität der Anodengas-Diffusionsschicht 42 % oder mehr beträgt.

3. Membran-Elektroden-Anordnung nach Anspruch 1 oder 2, wobei die Porosität der Kathodengas-Diffusionsschicht mehr als 60 % beträgt.

4. Membran-Elektroden-Anordnung nach einem der Ansprüche 1 bis 3, wobei die Kathodengas-Diffusionsschicht ein poröses Element umfasst, das hauptsächlich leitende Teilchen und ein Polymerharz enthält.

5. Membran-Elektroden-Anordnung nach Anspruch 4, wobei die Porosität der Kathodengas-Diffusionsschicht 76 % oder weniger beträgt.

6. Membran-Elektroden-Anordnung nach Anspruch 4 oder 5, wobei die jeweils in der Anodengas-Diffusionsschicht und der Kathodengas-Diffusionsschicht enthaltenen leitenden Teilchen zwei Arten von Kohlenstoffmaterialien umfassen, die sich hinsichtlich des durchschnittlichen Teilchendurchmessers voneinander unterscheiden.

7. Membran-Elektroden-Anordnung nach Anspruch 8, wobei bei den zwei Arten von Kohlenstoffmaterialien, die in der Anodengas-Diffusionsschicht enthalten sind und sich hinsichtlich des durchschnittlichen Teilchendurchmessers voneinander unterscheiden, ein Mischungsverhältnis des Kohlenstoffmaterials mit kleinem durchschnittlichen Teilchendurchmesser zu dem Kohlenstoffmaterial mit großem durchschnittlichen Teilchendurchmesser zwischen 1:0,7 und 1:2 beträgt.

8. Membran-Elektroden-Anordnung nach einem der Ansprüche 4 bis 7, wobei ein Gewicht des in der Kathodengas-Diffusionsschicht enthaltenen Polymerharzes größer ist als das des in der Anodengas-Diffusionsschicht enthaltenen Polymerharzes, und dabei jedes der Gewichte das Gewicht pro Volumeneinheit desselben ist.

9. Membran-Elektroden-Anordnung nach Anspruch 8, wobei die Anodengas-Diffusionsschicht und die Kathodengas-Diffusionsschicht das Polymerharz in einer Menge von 10 Gew.-% oder mehr und 17 Gew.-% oder weniger enthalten.

10. Membran-Elektroden-Anordnung nach einem der Ansprüche 4 bis 9, wobei die Anodengas-Diffusionsschicht und die Kathodengas-Diffusionsschicht eine Kohlefaser mit einem Gewicht enthalten, das geringer ist als ein Gewicht des Polymerharzes.

11. Membran-Elektroden-Anordnung nach Anspruch 10, wobei ein Gewicht der in der Kathodengas-Diffusionsschicht enthaltenen Kohlefaser größer ist als das der in der Anodengas-Diffusionsschicht enthaltenen Kohlefaser, und jedes der Gewichte das Gewicht pro Volumeneinheit derselben ist.

12. Membran-Elektroden-Anordnung nach Anspruch 11, wobei die Anodengas-Diffusionsschicht und die Kathodengas-Diffusionsschicht die Kohlefaser in einer Menge von 2,0 Gew.-% oder mehr und 7,5 Gew.-% oder weniger enthalten.

13. Membran-Elektroden-Anordnung nach einem der Ansprüche 10 bis 12, wobei die Kohlefaser eine mittels Dampfphasenzüchtung hergestellte Kohlefaser, eine Kurzfaser oder eine Schnittfaser ist.

14. Brennstoffzelle, die eine Membran-Elektroden-Anordnung nach einem der Ansprüche 1 bis 13 sowie ein Paar Separatoren enthält, die so angeordnet sind, dass die Membran-Elektroden-Anordnung zwischen ihnen angeordnet ist.

15. Brennstoffzelle nach Anspruch 14, wobei, wenn die Brennstoffzelle betrieben wird, Taupunkte eines Brenngases und eines Oxidationsgases, die der Brennstoffzelle zugeführt werden, unter einer Betriebstemperatur der Brennstoffzelle liegen.

## Revendications

1. Assemblage membrane-électrode, comprenant :
une membrane d'électrolyte polymère ;
une paire de couches de catalyseur opposées entre elles pour y interposer la membrane d'électrolyte polymère ; et
une couche de diffusion gazeuse d'anode et une couche de diffusion gazeuse de cathode opposées entre elles pour y interposer la membrane d'électrolyte polymère et la paire de couches de catalyseur,
dans lequel la couche de diffusion gazeuse d'anode comprend un élément poreux comportant principalement des particules conductrices et une résine polymère,
une porosité de la couche de diffusion gazeuse d'anode étant inférieure ou égale à 60 %,
une porosité de la couche de diffusion gazeuse de cathode étant supérieure à celle de la couche de diffusion gazeuse d'anode, et
dans lequel une épaisseur de la couche de diffusion gazeuse de cathode est inférieure à celle de la couche de diffusion gazeuse d'anode,
dans lequel l'épaisseur de chacune des couches de diffusion gazeuse d'anode et de cathode est supérieure ou égale à 200 µm et inférieure ou égale à 400 µm.

2. Assemblage membrane-électrode selon la revendication 1, dans lequel la porosité de la couche de diffusion gazeuse d'anode est supérieure ou égale à 42 %.

3. Assemblage membrane-électrode selon la revendication 1 ou 2, dans lequel la porosité de la couche de diffusion gazeuse de cathode est supérieure à 60 %.

4. Assemblage membrane-électrode selon l'une quelconque des revendications 1 à 3, dans lequel la couche de diffusion gazeuse de cathode comprend un élément poreux comportant principalement des particules conductrices et une résine polymère.

5. Assemblage membrane-électrode selon la revendication 4, dans lequel la porosité de la couche de diffusion gazeuse de cathode est inférieure ou égale à 76 %.

6. Assemblage membrane-électrode selon la revendication 4 ou 5, dans lequel les particules conductrices contenues dans chacune des couches de diffusion gazeuse d'anode et de cathode comprennent deux sortes de matériaux à base de carbone qui diffèrent entre eux par leur diamètre de particule moyen.

7. Assemblage membrane-électrode selon la revendication 6, dans lequel, concernant les deux sortes de matériaux à base de carbone contenus dans la couche de diffusion gazeuse d'anode qui diffèrent entre eux par leur diamètre de particule moyen, un taux de mélange du matériau à base de carbone dont le diamètre de particule moyen est petit par rapport au matériau à base de carbone dont le diamètre de particule moyen est grand est compris entre 1:0,7 et 1:2.

8. Assemblage membrane-électrode selon l'une quelconque des revendications 4 à 7, dans lequel la masse de la résine polymère contenue dans la couche de diffusion gazeuse de cathode est supérieure à celle de la résine polymère contenue dans la couche de diffusion gazeuse d'anode, chacune des masses étant une masse par unité de volume correspondante.

9. Assemblage membrane-électrode selon la revendication 8, dans lequel la couche de diffusion gazeuse d'anode et la couche de diffusion gazeuse de cathode contiennent la résine polymère à raison d'une concentration supérieure ou égale à 10 % en masse et inférieure ou égale à 17 % en masse.

10. Assemblage membrane-électrode selon l'une quelconque des revendications 4 à 9, dans lequel la couche de diffusion gazeuse d'anode et la couche de diffusion gazeuse de cathode contiennent une fibre de carbone dont la masse est inférieure à celle de la résine polymère.

11. Assemblage membrane-électrode selon la revendication 10, dans lequel la masse de la fibre de carbone contenue dans la couche de diffusion gazeuse de cathode est supérieure à celle de la fibre de carbone contenue dans la couche de diffusion gazeuse d'anode, chacune des masses étant une masse par unité de volume correspondante.

12. Assemblage membrane-électrode selon la revendication 11, dans lequel la couche de diffusion gazeuse d'anode et la couche de diffusion gazeuse de cathode contiennent la fibre de carbone à raison d'une concentration supérieure ou égale à 2,0 % en masse et inférieure ou égale à 7,5 % en masse.

13. Assemblage membrane-électrode selon l'une quelconque des revendications 10 à 12, dans lequel la fibre de carbone est une fibre quelconque parmi une fibre de carbone produite par un procédé de croissance en phase vapeur, une fibre moulue et une fibre hachée.

14. Pile à combustible comprenant un assemblage membrane-électrode selon l'une quelconque des revendications 1 à 13, et une paire de séparateurs agencés pour interposer entre eux l'assemblage membrane-électrode.

15. Pile à combustible selon la revendication 14, dans laquelle, lorsque la pile à combustible fonctionne, les points de rosée d'un gaz combustible et d'un gaz oxydant fournis à la pile à combustible sont inférieurs à une température de fonctionnement de la pile à combustible.
